# EUROPEAN PATENT APPLICATION

(11) **EP 4 534 240 A2**
(43) Date of publication of application: **09.04.2025**
(21) Application number: 24177948.7
(22) Date of filing: 24.05.2024
(51) Int. Cl.: B23Q 7/04, B65D 21/02, A47B 87/02

(54) **TRAY SYSTEM FOR ROBOTIC PART PROCESSING**

(30) Priority: 26.05.2023 US 202318202570
(71) Applicant: Hurco Companies, Inc., Indianapolis, IN 46268 (US)
(72) Inventor: GRAY, Paul J., Zionsville, Indiana 46077 (US)
(74) Representative: Marks & Clerk LLP

(57) **Abstract**

A tray system for robotic part processing is provided, comprising: a plurality of substantially identical trays, each including a base having an upper surface and a lower surface, a frame connected to the upper surface of the base and defining a plurality of pockets for receiving workpieces, and a plurality of spacers, each spacer including an alignment feature on the upper surface or the lower surface of the base, and at least one stacking post on another of the upper surface or the lower surface of the base of each of the plurality of trays, each stacking post including one end having a centering tip and another end configured to mate with another stacking post; wherein the trays are configured to be stacked in alignment with one another by placing the plurality of alignment features of one tray into engagement with the plurality of spacers of another tray.

## Description

### TECHNICAL FIELD

The present application relates generally to robotic part processing, and more particularly to robotic part transfer systems and methods for presenting parts or workpieces to a processing machine and receiving processed workpieces from the processing machine.

### BACKGROUND

Robotic part transfer systems or machine tending systems for use with processing machines such as CNC machines are known. A variety of different approaches for presenting workpieces to the robot and receiving processed workpieces from the robot exist. For example, fixed table systems may present workpieces to a robot. The workpieces are arranged in a known configuration on the table top for removal by the robot and placement into a workspace of a processing machine. The capacity of the table is limited by the size of the table, although in some applications the workpieces may be stacked onto one another. The stacks, however, can only be so high before they become unstable.

Alternatively, drawer systems exist which provide an enclosure with a plurality of drawers, each holding a plurality of workpieces. This may increase the number of parts presented to the robot relative to a fixed table system, but such drawer systems are extremely expensive, due primarily to the industrial slides and bearings needed for each drawer to meet the load capacity of the workpieces in the drawer. Additionally, in certain applications an independent device is needed to open the drawers for the robot, which adds complexity and cost to the system. Otherwise, the robot must have sufficient payload capacity to pull the drawer full of workpieces, which may add cost to the robot. In any case, the programming complexity and calibration necessary for use of such drawer systems is substantially greater than a fixed table system, and the drawer systems are inevitably less reliable.

In still further alternative approaches, conveyor systems, hoppers, vibration bowls, part chutes, vision systems, stacking systems, or chute systems are used for machine tending. However, each of these approaches is deficient or limited in terms of capacity, complexity, cost, ease of programming, capability of handling high-mix manufacturing, or some combination of these.

Stackable trays of workpieces may be used to present parts to the robot, but the existing systems typically require a very large, high payload robot because the robot must lift entire trays of processed workpieces. More specifically, in some such systems the robot loads workpieces into a processing machine individually from a top tray in a stack of trays. The robot then places the processed workpieces back on the top tray when the processing is complete. Eventually, the top tray is full of processed workpieces, and the robot lifts the entire tray of processed workpieces and moves the tray to completed stack. This requires a high payload, which increases the cost of the robot. While a dedicated system designed to move trays of workpieces to the robot and return trays of processed workpieces may be provided, such a system also greatly increases cost and complexity.

Accordingly, it is desirable to provide a tray system for robotic part processing that is low cost, simple, configurable, and capable of accommodating a large capacity of parts of various dimensions with a small footprint.

### SUMMARY

In one embodiment of the present disclosure, a tray system for robotic part processing is provided, comprising: a plurality of substantially identical trays, each tray including a base having an upper surface and a lower surface, a frame connected to the upper surface of the base and defining a plurality of pockets for receiving workpieces, and a plurality of spacers, each spacer including an alignment feature on one of the upper surface or the lower surface of the base, and at least one stacking post on another of the upper surface or the lower surface of the base of each of the plurality of trays, each stacking post including one end having a centering tip and another end configured to mate with another stacking post; wherein the trays are configured to be stacked in alignment with one another by placing the plurality of alignment features of one tray into engagement with the plurality of spacers of another tray. In one aspect of this embodiment, the other end of each stacking post is an alignment end having an interior surface shaped to receive a centering tip of another stacking post. In a variant of this aspect, each stacking post includes a threaded opening that extends between the one end and the alignment end. In a further variant, each of the plurality of spacers further includes a bolt including a head, the bolt being configured to extend through an alignment feature and the base of a tray, and to be threaded into the threaded opening of the at least one stacking post, thereby causing the head of the bolt to seat within a recess of the alignment feature and connecting the alignment feature and the at least one stacking post to the base. A still further variant, further comprises a plurality of solid spacers positioned between the base and the frame, the bolt of each of the plurality of spacers extending though one of the plurality of solid spacers. In another aspect of this embodiment, each alignment feature includes a beveled surface and a central opening and each centering tip includes a tapered end and a tip, the tapered end being configured to cooperate with the beveled surface to position the tip within the central opening of the alignment feature. In another aspect, each alignment feature is connected to the lower surface of the base and each of the at least one stacking posts is connected to the upper surface of the base of each of the plurality of trays; and wherein the trays are configured to be stacked in alignment with one another by placing the alignment features of an upper tray onto the centering tips of the at least one stacking post connected to a lower tray. In yet another aspect, the tray system further comprises a plurality of substantially identical supports for carrying any one or more of the plurality of trays, each support including a base having an upper surface and a plurality of alignment members on the upper surface, the plurality of alignment members of each support being configured to mate with a corresponding plurality of alignment features connected to the lower surface of the base of any one of the plurality of trays to position the tray in a predetermined location and orientation on the support. In a variant of this aspect, each support is a cart including a plurality of wheels connected to a lower surface of the base of the support. Another variant further comprises a docking station including at least one dock, each of the at least one dock being configured to position any support of the plurality of supports in a predetermined location and orientation. In another variant, the docking station is mounted on a processing machine. In yet another variant, each of the supports includes a docking member and each of the at least one dock includes a mating component configured to mate with the docking member of any support of the plurality of supports to position the support. In another variant, a first dock of the at least one dock of the docking station is configured to position a first support functioning as an infeed support, a second dock is configured to position a second support functioning as an outfeed support, and a third dock is configured to position a third support functioning as a robot support. In a further variant, the robot support includes a robot for moving workpieces from at least one tray on the infeed support to a workspace of a processing machine and from the workspace to at least one tray on the outfeed support, and for removing empty trays from the infeed support and stacking the empty trays on the outfeed support. In yet another aspect of this embodiment, the tray system further comprises a first dock configured to mate with a mating component on a first support functioning as a robot support, and a second dock mounted on the robot support and configured to mate with a mating component on a second support functioning as an infeed support. A variant of this aspect further comprises a third dock mounted on the robot support and configured to mate with a mating component on a third support functioning as an outfeed support. In another variant, the first dock is mounted on a processing machine. In another aspect, each of the supports includes a height adjustor operably coupled to the base and configured to position the upper surface of the base at any of a plurality of vertical positions. In another aspect of this embodiment, the other end of each stacking post is a threaded end configured to thread into a threaded opening formed in the upper surface of the base of each of the plurality of trays and the one end of each stacking post is a threaded opening configured to receive a threaded end of another stacking post. In a variant of this aspect, the threaded opening of each stacking post is also configured to receive a threaded end of a centering tip of the spacer. In still another aspect, each tray of the plurality of trays includes a first mating structure configured to mate with a second mating structure of an arm of a robot to facilitate lifting the tray and moving the tray from one location to another location. In a variant of this aspect, the first mating structure is on the frame of the tray. In a further variant, the first mating structure is one of attached to or integral with at least one of the plurality of spacers of the tray. In yet another variant, the first mating structure is an engagement block mounted to the tray and the second mating structure is a mating block mounted to an arm of the robot, the engagement block including a plurality of non-parallel bores and the mating block including a fixed pin configured to be received by a first bore of the plurality of non-parallel bores and a movable pin configured to be received by a second bore of the plurality of non-parallel bores. In a further variant, the movable pin is biased by a biasing member toward an extended position and is retracted by an actuator toward a retracted position. In another aspect, each tray of the plurality of trays includes a hook attached to the tray at a position offset from a center line of the tray, the hook being configured to mate with an interlock hook coupled to an arm of a robot to facilitate lifting the tray and moving it from one location to another location. In a variant of this aspect, each hook is attached to the frame of the tray.

In another embodiment, the present disclosure provides a tray for use in robotic part processing, comprising: a base including an upper surface and a lower surface; a frame connected to the upper surface and including a plurality of segments defining a plurality of pockets; a plurality of alignment features on one of the upper surface or the lower surface of the base; and a plurality of spacers integrally formed on another of the upper surface or the lower surface of the base, each spacer being configured to engage with an alignment feature on one of an upper surface or a lower surface of a base of a different tray.

In yet another embodiment, the present disclosure provides a tray for use in robotic part processing, comprising: a base including an upper surface and a lower surface; a frame connected to the upper surface and including a plurality of segments defining a plurality of pockets; and a plurality of spacers coupled to the base, the plurality of spacers including a plurality of alignment features positioned adjacent one of the upper surface or the lower surface of the base, a plurality of stackable posts positioned adjacent another of the upper surface or the lower surface of the base, each stackable post having a centering end and an alignment end, and a plurality of bolts configured to couple the plurality of alignment features and the plurality of stackable posts to the base; wherein the centering end of each of the stackable posts is configured to mate with any of the plurality of alignment features and any of the alignments ends of other stackable posts to increase the length of the spacer. In one aspect of this embodiment, the tray further comprises a pad attached to the upper surface of the base. In another aspect, each of the alignment ends of the stackable posts includes an interior surface shaped to receive a centering end of another stackable post. In another aspect, each of the plurality of bolts includes a head, the bolt being configured to extend through an alignment feature and the base of a tray, and to be threaded into a central threaded opening of a stackable post, thereby causing the head of the bolt to seat within a recess of the alignment feature and connecting the alignment feature and the stackable post to the base. In a variant of this aspect, the central threaded opening extends from the centering end of the stackable post to the alignment end of the stackable post.

In still another embodiment, the present disclosure provides a method of robotic workpiece transfer, comprising: positioning a robot relative to a workspace of a processing machine; positioning an infeed support relative to the robot; determining a coordinate system of the infeed support relative to a base of the robot from fixed features on the infeed support; positioning an outfeed support relative to the robot; determining a coordinate system of the outfeed support relative to the base of the robot from fixed features on the outfeed support; calibrating a 3D space to establish a location and orientation, relative to the base of the robot, of a plurality trays positioned on the infeed support; performing a workpiece transfer sequence to transfer workpieces from a tray of the plurality of trays positioned on the infeed support, to the workspace, and to a tray on the outfeed support; repeating the workpiece transfer sequence until an uppermost tray of the plurality of trays on the infeed support is empty; determining, in response to the uppermost tray being empty, whether the empty uppermost tray is a bottom tray of the plurality of trays; and responding to the empty uppermost tray not being the bottom tray by controlling the robot to move the empty uppermost tray onto an uppermost tray on the outfeed support and repeating the workpiece transfer sequence, the repeating step and the determining step. In one aspect of this embodiment, performing a workpiece transfer sequence includes controlling the robot to remove a workpiece from an uppermost tray of a stack of trays on the infeed support; controlling the robot to place the removed workpiece in the workspace to be processed into a processed workpiece; controlling the robot to remove the processed workpiece from the workspace; and controlling the robot to place the processed workpiece into an uppermost tray on the outfeed support. In another aspect, calibrating the 3D space includes teaching the robot positions of three points on each tray. In another aspect, calibrating the 3D space includes receiving a stacking height between adjacent trays. In a variant of this aspect, the stacking height between all adjacent trays of the plurality of trays is the same. Another aspect of this embodiment further comprises receiving a definition of spacing of pockets of the plurality of trays. In another aspect, determining a coordinate system of the infeed support includes the robot gripping at least three alignment members on the infeed support and contacting an upper surface of the infeed support. In another aspect, calibrating a 3D space further includes the robot gripping at least three spacers attached to a tray of the plurality of trays and determining a stacking height between the tray and another tray of the plurality of trays stacked on the tray. Another aspect further comprises receiving definitions of trays positioned on the infeed support and holding workpieces, the definitions including a stacking height between trays and the location and orientation of pockets for workpieces on the trays. In a variant of this aspect, receiving definitions of trays includes reading one of an RFID or a QR code associated with each tray. Another aspect of this embodiment further comprises responding to the empty uppermost tray of the plurality of trays on the infeed support being the bottom tray of the plurality of trays by determining whether an additional infeed support with a plurality of trays is available; and responding to an additional infeed support being available by using the infeed support as an outfeed support and using the additional infeed support as the infeed support, and repeating the workpiece transfer sequence, the repeating step, the determining step, and the step of responding to the empty uppermost tray of the plurality of trays on the infeed support not being the bottom tray.

### BRIEF DESCRIPTION OF THE DRAWINGS

The above mentioned and other features of this disclosure, and the manner of attaining them, will become more apparent and the disclosure itself will be better understood by reference to the following description of embodiments of the disclosure taken in conjunction with the accompanying drawings, wherein:
FIG. 1 is a perspective view of a tray system according to one embodiment of the present disclosure with a processing machine;
FIGS. 2A and 2B are conceptual diagrams of other embodiments of tray systems according to the present disclosure;
FIG. 3 provides a side view and a top view of a tray for use in a tray system according to the present disclosure;
FIG. 4 is a perspective view of a spacer according to one embodiment of the present disclosure;
FIG. 5 is a side view of a support with a plurality of trays carrying workpieces according to one embodiment of the present disclosure;
FIG. 6A is a perspective, cross-sectional view of another embodiment of a spacer according to the present disclosure;
FIG. 6B is a perspective view of a tray using the spacers of FIG. 6A;
FIG. 7 is a perspective, cross-sectional view of a plurality of trays using the spacers of FIG. 6A;
FIG. 8A is a perspective, cross-sectional view of another embodiment of a spacer according to the present disclosure;
FIG. 8B is a perspective view of a plurality of trays using the spacers of FIG. 8A;
FIG. 9A is a perspective, cross-sectional view of another arrangement of the spacers of FIG. 8A and a plurality of trays;
FIG. 9B is a perspective view of a plurality of trays using the spacer arrangement of FIG. 9A;
FIGS. 10 through 19 are schematic end views of a tray system according to the present disclosure at various stages of moving workpieces from trays on an infeed support, into and out of a processing machine, and to trays on an outfeed support;
FIG. 20A is an enlarged perspective view of section "A" of the frame shown in FIG. 3;
FIG. 20B is a perspective view of a wrist attachment according to one embodiment of the present disclosure;
FIG. 21 provides a perspective view of the frame identical to FIG. 18A and a perspective view of the wrist attachment of FIG 18B attached to a robot;
FIG. 22A is a perspective view of an engagement block of an engagement mechanism according to one embodiment of the present disclosure;
FIG. 22B is a top, plan view of a mating block of the engagement mechanism;
FIG. 22C is a perspective view of a tray having the engagement block of FIG. 22A attached thereto;
FIG. 23 is a flow diagram of a method of processing workpieces using a tray system according to the present disclosure;
FIG. 24 is a perspective view of an alternative embodiment of a support according to the present disclosure;
FIGS. 25 through 27 are screenshots of an interface of a controller according to one embodiment of the present disclosure;
FIG. 28 is a perspective view of supports and a processing machine;
FIG. 29 is a top view of a tray according to one embodiment of the present disclosure;
FIG. 30 is a cross-sectional, side view of another arrangement of the spacers of FIG. 6A and a plurality of trays; and
FIG. 31 is a perspective view of another embodiment of a support according to the present disclosure.

Corresponding reference characters may indicate corresponding parts throughout the several views.

### DETAILED DESCRIPTION OF THE DRAWINGS

It is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

While the structures and components disclosed herein may be embodied in many different forms, several specific embodiments are discussed herein with the understanding that the embodiments described in the present disclosure are to be considered only exemplifications of the principles described herein, and the disclosure is not intended to be limited to the embodiments illustrated.

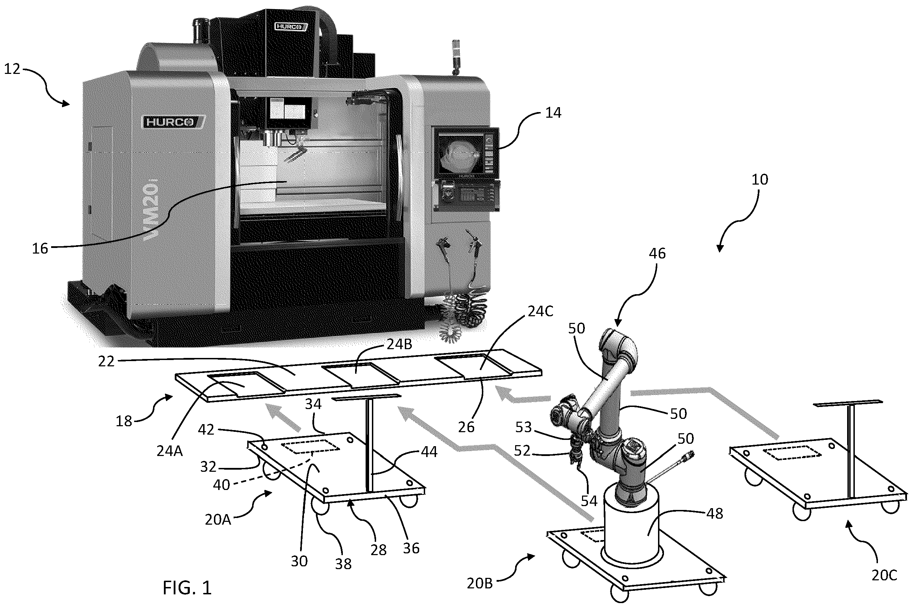

Referring now to FIG. 1, a tray system 10 for robotic part processing according to one embodiment of the present disclosure is shown. The tray system 10 in this embodiment is used in conjunction with a processing machine 12, such as a CNC machine, having a controller 14 and a workspace 16. The tray system 10 generally includes a docking station 18 and a plurality of supports 20 configured to carry a plurality of trays 56 (and/or a robot) as is further described below. The supports 20 may be stationary or mobile. In the following description the supports 20 are depicted as carts by way of example only. In some applications, the docking station 18 is fixed to the floor adjacent the processing machine 12. Multiple docking stations 18 may be secured in fixed positions adjacent a corresponding plurality of processing machines 12. In this manner, supports 20 may be moved from docking station 18 to docking station 18 to be used in conjunction with any of the plurality of processing machines 12. In other embodiments, the docking station 18 is portable and can be moved to and fixed in position adjacent any of the plurality of processing machines 12 to enable use of the tray system 10 to perform different processing operations.

The docking station 18 generally includes a base 22 that is substantially flat and low-profile. The base 22 may be attached to the floor using any of a variety of attachment devices such as fasteners, etc. The base 22 includes a plurality of docks 24A-C that are spaced apart from one another along the length of the base 22. The docks 24A-C are configured with a forward edge 26 that is sufficiently low that a forward edge 34 of a support 20A-C can move into the docks 24A-C. The docks 24A-C include a mating component (not shown) that is configured to mate with a corresponding docking member 40 of a support 20A-C. The mating component and docking member 40 can take any of a variety of different forms, such as mechanical connectors, electro-mechanical connectors, spring-loaded ball and detent components, magnetic components, and/or simply a protrusion and recess connection between the mating component and the docking member 40. In any event, the docking member 40 is positioned within the dock 24A-C in a precise location by the mating component to orient the support 20A-C and the contents of the support 20A-C for part processing as is further described below. It should be understood that while three docks 24A-C are shown on the example docking station 18, more or fewer docks may be used.

In one embodiment, the supports 20A-C are substantially identical and interchangeable. Accordingly, only one support 20A is described in detail herein. The support 20A generally includes a base 28 having an upper surface 30, a lower surface 32, a forward edge 34, a rearward edge 36, a plurality of wheels 38 connected to the lower surface 32 of the base 28, a docking member 40 connected to the lower surface 32 of the base 28 adjacent the forward edge 34, alignment members 42 mounted to the upper surface of the base 28, and a handle 44 for moving the support 20A from location to location. The alignment members 42 are configured to precisely position a tray on the support 20A as is further described below. In the embodiment shown, four alignment members 42 are used, one adjacent each corner of the base 28 of the support 20A. It should be understood, however, that more or fewer alignment members 42 may be used as is further described below. Also, the handle 44 may be permanently attached to the support 20A or removably attached to the support 20A. In other embodiments, the support 20A does not include a handle 44 at all.

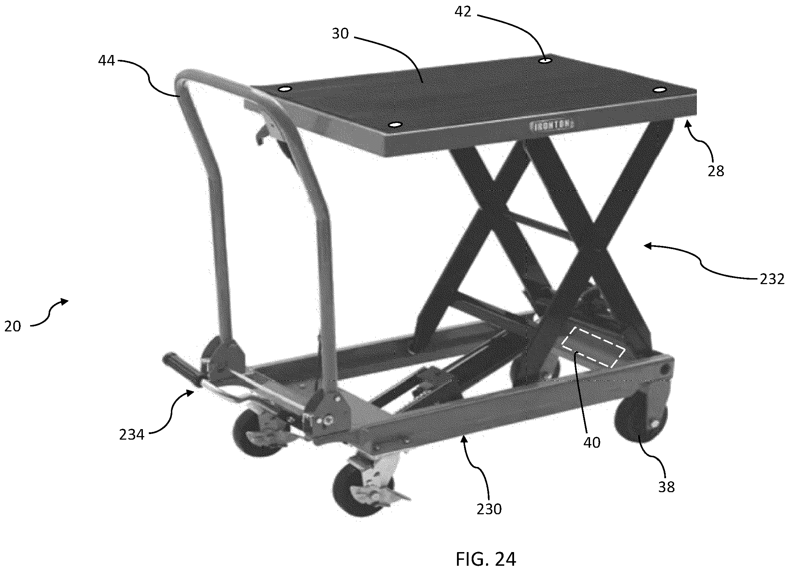

Referring now to FIG. 24, an alternative embodiment of a support 20 according to the present disclosure is shown. Support 20 generally includes a base 28, a frame 230 and a height adjustor 232 coupled between the base 28 and the frame 230 and configured to position the upper surface 30 of the base 28 at any of a plurality of vertical positions. In certain embodiments, a user may manually position the base 28 in a vertical position using a manual control 234. In other embodiments, the support 20 may include electronics (not shown) that may be actuated by the user to cause the base 28 to move to a desired vertical position. In this manner, the working height of the stacked trays 56 may be set to an improved ergonomic height for a particular job. For example, if only one or two trays 56 are used in a particular job, the base 28 of the support 20 may be moved to a raised vertical position to make it easier and more comfortable for an operator to load the trays 56 (as compared to loading them onto a base 28 that is near the floor). The customized height of the base 28 also improves the efficiency of the robot 46 by reducing its motion. It should be understood that the height adjustor 232 could be a fixed-increment locking scissor lift with height increments known to the controller 14 or a variable position scissor lift with height positions that must be taught to or measured/sensed by the robot 46.

Referring back to FIG. 1, in the depicted embodiment of the tray system 10 of the present disclosure, the support 20A functions as an infeed support, the support 20C functions as an outfeed support, and the support 20B functions as a robot support. Thus, as shown a robot 46 is mounted to the support 20B. The support 20B may be readily modified to receive a robot base 48, which may be connected to the support 20B using fasteners or other attachment mechanisms. The robot 46 is shown schematically, with many parts omitted for ease of description. The robot 46 may be any of a variety of suitable robots 46 functionally equipped to pick up, relocate and put down parts being processed. For purposes of this description, the robot 46 is shown as having arm segments 50 that articulate relative to one another, and at least one gripper 52 mounted to a wrist 53 of the robot. The at least one gripper 52 generally includes two or more fingers 54 for grasping, holding and releasing parts or workpieces being processed.

As shown, in the depicted embodiment the infeed support 20A is moved to dock with dock 24A, the robot support 20B is moved to dock with dock 24B, and the outfeed support 20C is moved to dock with dock 24C. When all of the supports 20A-C are docked in the docking station 18, the locations and orientations of the supports 20A-C will correspond to locations and orientations programmed into the controller 14 of the processing machine 12 or a separate controller. In other words, the controller 14 (or an additional robot controller) is programmed to know the location and geometry of the workspace 16, the robot 46, the docking station 18, the supports 20A-C, the trays 56 (described below) on the supports 20A-C, and the workpieces in the trays 56 so that when the components of the tray system 10 are in place the robot 46 will be controllable to move to precise locations on the infeed support 20A, the outfeed support 20C and the workspace 16. In other embodiments and as is further described below, when the components of the tray system 10 are in place, the robot 46 may be taught the locations and geometries of the supports 20A-C and the workspace 16 by manually jogging or teaching the robot 46, using force sensors (not shown) on the robot 46 to detect objects, using a vision system (not shown) in conjunction with the robot 46, etc. or some combination of these methods as are known in the art.

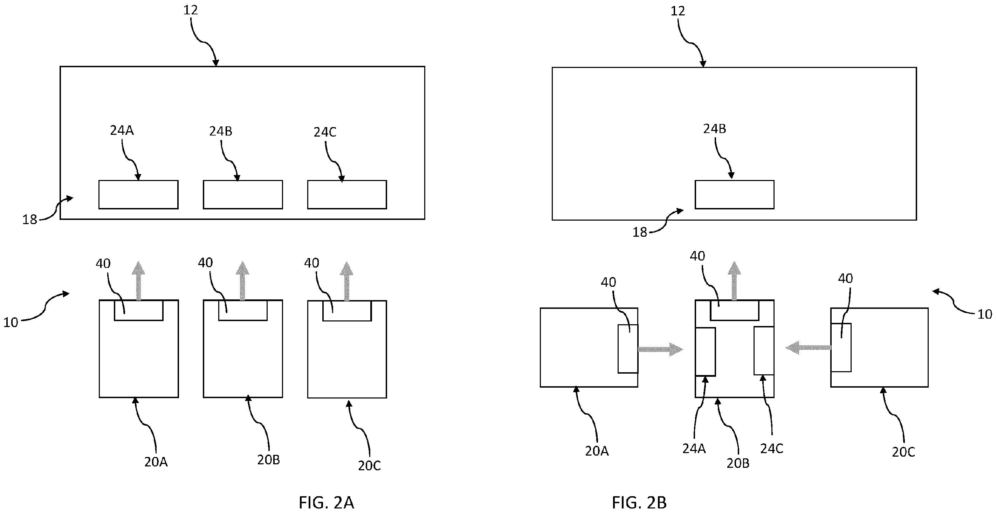

Referring now to FIG. 2A, an alternate embodiment of a tray system 10 is shown wherein the docking station 18 consists of docks 24A-C mounted to the front of the processing machine 12 instead of to the floor in front of the processing machine 12. In this embodiment, the corresponding docking members 40 on the supports 20A-C are positioned to mate with mating components of the docks 24A-C. In such an embodiment, the location of the docking station 18 may reduce the possibility of tripping or otherwise engaging the docking station 18.

FIG. 2B depicts yet another configuration of a tray system 10 according to the present disclosure. In this embodiment, the docking station 18 includes one dock 24B mounted to the processing machine 12 instead of in front of the processing machine 12 on the floor. The docking member 40 of the support 20B is configured to mate with the dock 24B. The support 20B also includes two docks 24A and 24C. The docking member 40 of the support 20A mates with the dock 24A on the support 20B and the docking member 40 of the support 20C mates with the dock 24C on the support 20B. In any of these embodiments, after the supports 20A-C are docked, the location of all of the relevant components may be known to the controller 14 (by prior programming) or taught to the controller 14.

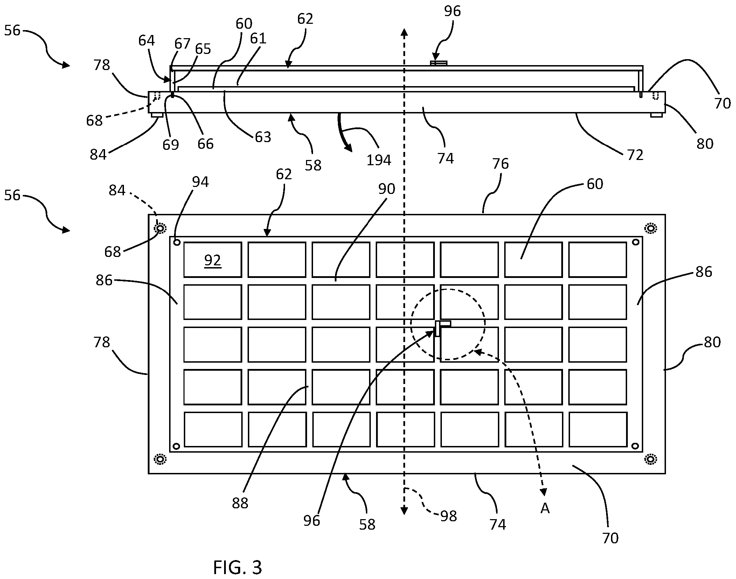

Referring now to FIG. 3, a tray 56 according to one embodiment of the present disclosure is shown. The tray 56 generally includes a base 58, a pad 60, a frame 62 and, in certain embodiments, stand-offs 64. In certain embodiments, the base 58 is generally planar and rectangular in shape and includes a first set of threaded openings 68 formed into an upper surface 70, a second set of threaded openings 69 (in certain embodiments) formed into the upper surface 70, a lower surface 72, a first side edge 74, a second side edge 76, a first end edge 78, a second end edge 80, and a plurality of alignment features 84, each alignment feature 84 being attached to the lower surface 72 adjacent a corner formed by one of the side edges 74, 76 and one of the end edges 78, 80 as is further described below.

The pad 60 is also generally planar and rectangular in shape and includes an upper surface 61 and a lower surface 63. The pad 60 is made of a somewhat resilient material such as rubber and is attached at its lower surface 63 to the upper surface 70 of the base 58. The pad 60 functions as the contact surface for the workpieces that are loaded onto the tray 56.

The frame 62 of the tray 56 may be any of a variety of sizes and shapes for accommodating workpieces having different geometries as is further described herein. In one embodiment, the frame 62 may be formed in the manner described in co-pending U.S. Patent Application S/N 17,844,895 (Attorney Docket No. HUR-0229-01-US), filed on June 21, 2022 and entitled "CONFIGURABLE CAPACITY GRID TRAY FOR ROBOT PART HANDLING" (hereinafter, "the `895 Application"), the entire contents of which being expressly incorporated herein by reference. In the depicted embodiment, the frame 62 generally includes end segments 86, width segments 88, and length segments 90, which together form a plurality of pockets 92 for receiving workpieces and processed parts as is further described herein. As shown, the segments 86, 88, 90 of the frame 62 generally form a grid of pockets 92 which, in this example, are substantially the same size and shape. It should be understood, however, that the segments 86, 88, 90 of the frame 62 may be modified to form larger or smaller pockets 92, more or fewer pockets 92, and/or pockets 92 of different sizes within the frame 62. The frame 62 further includes a plurality of apertures 94 configured to receive fasteners (not shown) to connect the frame 62 to the stand-offs 64. In the depicted embodiment, four apertures 94 are shown disposed adjacent ends of the end segments 86. It should be understood, however, that more or fewer apertures 94 may be used and they may be located at different locations on the frame 62.

It should also be understood that the frame 62 may be integral with the base 58. In this embodiment, the tray 56 may be substantially one-piece (aside from the spacers 100 described below) wherein pockets are machined into a plate (e.g., an aluminum sheet) to hold parts. The pockets may be useful for irregularly sized workpieces 109 that may not sit in a stable position on a flat surface.

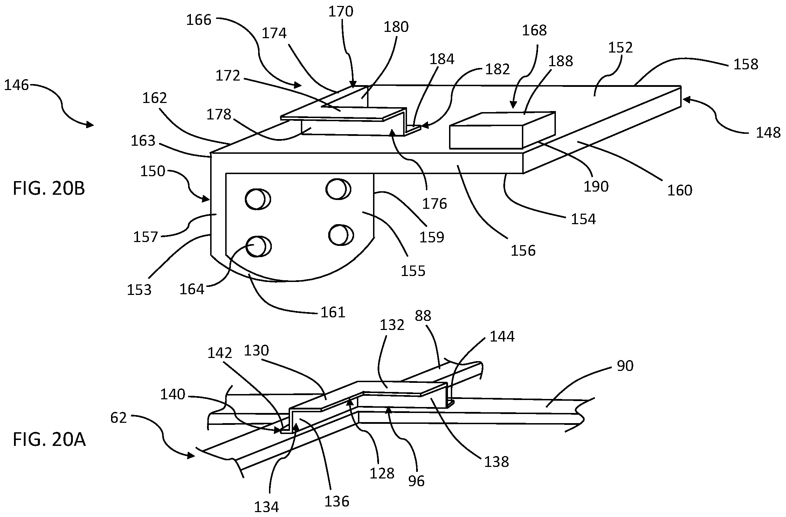

In one embodiment, the frame 62 also includes a hook 96 mounted adjacent an intersection between a width segment 88 and a length segment 90. The hook 96 is configured to provide a pickup location for the tray 56 as is further described below. As shown, the hook 96 is located at a position offset from a center line 98 of the tray 56. As is described below, this location facilitates the use of gravity to maintain the tray 56 is a stable position as it is moved from one location to another by the robot 46. The hook 96 is shown and described in more detail with reference to FIG. 20A, which is an enlargement of area "A" shown in FIG. 3.

Each stand-off 64 includes a body 65 having a threaded opening 67 at one end for receiving a fastener extending though an aperture 94 of the frame 62 to connect the frame 62 to the stand-off 64, and a threaded end 66 for threading the stand-off 64 into one of the threaded openings 69 of the based 58. In certain embodiments, the stand-offs 64 and accompanying openings may be omitted and the frame 62 may be mounted directly to the base 58 of the tray 56, or the frame 62 may be supported above the base 58 and the pad 60 by the spacers 100, 100', 100" and/or 600 described below.

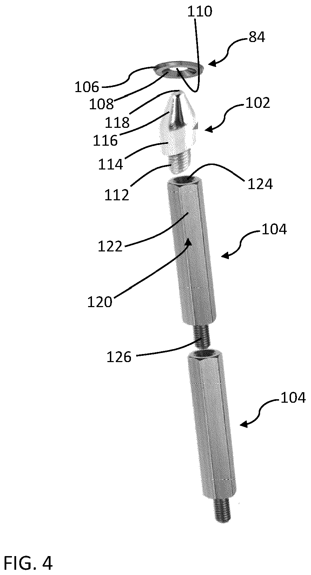

As is further described below, the trays 56 according to the present disclosure are stacked to increase the holding capacity of the supports 20. To facilitate such stacking, configurable spacers 100 are connected to each tray 56. Referring to FIG. 4, each spacer 100 is configured to mate with an alignment feature 84 mounted to the lower surface 72 of the base 58 of a tray 56 stacked on top of the spacers 100. The spacers 100 each include a centering tip 102 and at least one stacking post 104. The alignment features 84 in one embodiment are generally circular in shape having a ring-shaped body 106 with a central beveled surface 108 that terminates at a central opening 110. The centering tip 102 functions in conjunction with the alignment feature 84 to precisely position one tray 56 on top of another. The centering tip 102 includes a threaded end 112, a body 114, a tapered end 116 and a tip 118. The tapered end 116 cooperates with the beveled surface 108 of the alignment feature 84 to position the tip 118 precisely within the central opening 110 of the alignment feature 84.

Each stacking post 104 includes a body 120 having a plurality of flat portions 122 on its outer surface (e.g., a hex-shaped body), a threaded opening 124 and a threaded end 126. The threaded end 112 of the centering tip 102 may be threaded into the threaded opening 124 of the stacking post 104. The body of the centering tip 102 may be oval or include flats to permit use of a wrench to tightly thread the centering tip 102 into the stacking post 104. It should be understood that the threaded opening 124 of the stacking post 104 may also receive the threaded end 126 of another stacking post 104, thereby permitting multiple stacking posts 104 to be used to adjust the vertical distance between adjacent stacked trays 56. It should also be understood that the stacking posts 104 may be different lengths to provide even further adjustability to the vertical distance between adjacent trays 56. In alternative embodiments, the spacers 100 may include an alignment feature and the lower surface 72 of the tray 56 may include a centering feature such as the centering tip 102.

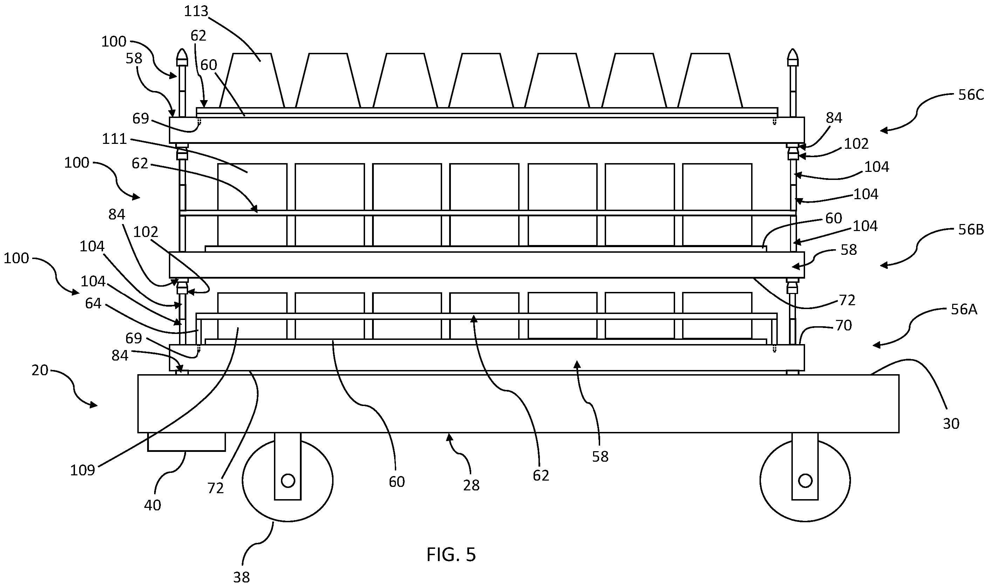

Referring now to FIG. 5, a support 20 is shown with a plurality of trays 56 stacked onto the support 20. It should be understood that while only three trays 56 are shown in FIG. 5, more or fewer trays 56 may be stacked onto a support 20 according to the principles of the present disclosure. As shown in FIG. 1, the support 20 includes the plurality of alignment members 42 on its upper surface 30. The alignment features 84 on the lower surface 72 of the first tray 56A align with the alignment members 42 on the support 20 to precisely position the first tray 56A on the support 20. It should be understood, of course, that the support 20 may include the alignment features 84 and the lower surface 72 of the trays 56 may include the alignment members 42. Moreover, the alignment members 42 may be in the form of pins as is described below. The first tray 56A in FIG. 5 is identical to the tray 56 depicted in FIG. 3. A plurality of spacers 100 are attached to the upper surface 70 of the first tray 56A. The centering tips 102 of the spacers 100 are received by the alignment features 84 of the second tray 56B to precisely position the second tray 56B onto the first tray 56A. The spacers 100 are sufficiently tall to avoid interference between the first workpieces 109 loaded into the pockets 92 formed in the first tray 56A and the lower surface 72 of the second tray 56B.

The second tray 56B is configured to receive taller workpieces 111. Specifically, three stacking posts 104 are used for each spacer 100 attached to the second tray 56B to provide sufficient vertical distance between the second tray 56B and the third tray 56C to accommodate the height of the workpieces 111. Additionally, the frame 62 of the second tray 56B is an alternative embodiment frame which extends between the spacers 100 instead of being attached to the second tray using stand-offs 64 as described above with reference to the tray 56 of FIG. 3. More specifically, the frame 62 is somewhat enlarged relative to the frame 62 of FIG. 3 so that the apertures 94 of the frame 62 are aligned with threaded ends 126 of the stacking posts 104. The threaded ends 126 extend through the apertures 94 and into the threaded openings 124 of the stacking posts 104 immediately below the middle stacking posts 104 of the spacers 100. In this manner, the stand-offs 64 can be eliminated. Also, the frame 62 of the second tray 56B is supported at a greater vertical distance above the base 58 of the second tray 56B as compared to the frame 62 of the first tray 56A. This may provide better support and positioning of the taller second workpieces 111 disposed in the second tray 56B.

The alignment features 84 of the third tray 56C are positioned onto the centering tips 102 of the spacers 100 of the second tray 56B, thereby positioning the third tray 56C precisely above the second tray 56B. The third tray 56C is configured such that the frame 62 is mounted directly onto the pad 60 using fasteners (not shown) that extend through the apertures 94 of the frame 62 and into the second set of threaded openings 69 of the base 58 of the third tray 56C. This creates shallow pockets 92 in the third tray 56C which position the bases of the frustoconical third workpieces 113.

As should be apparent from the foregoing, the spacers 100 may be customized and configured to accommodate workpieces of different height. Additionally, the frames 62 may be supported at different distances above the bases 58 of the trays 56. Moreover, the frames 62 may be configured to provide different sized pockets 92, spaced apart with different spacings, using a configurable frame such as that disclosed in the `895 Application mentioned above or otherwise. In this manner, substantially identical trays 56 may be easily configured using common components to accommodate different numbers and sizes of workpieces, while still stacking in a consistent arrangement as depicted in FIG. 5. It should also be understood that in alternative embodiments, the spacers 100 may be mounted to the lower surface 72 of the base 58 of the trays 56 and the alignment features 84 may be mounted to the upper surface 70 of the base 58. In still further embodiments, the function of the spacers 100 is performed by walls extending upwardly or downwardly from the base 58 of the trays 56, thereby eliminating the need for the spacers 100.

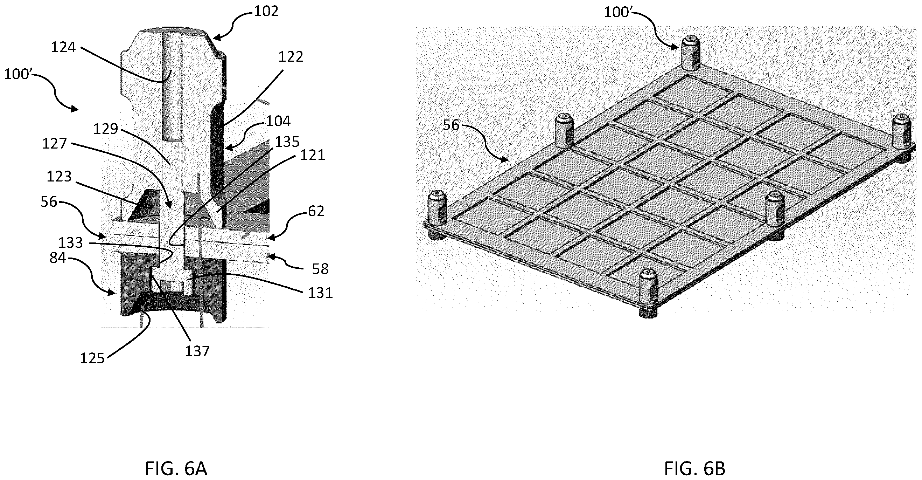

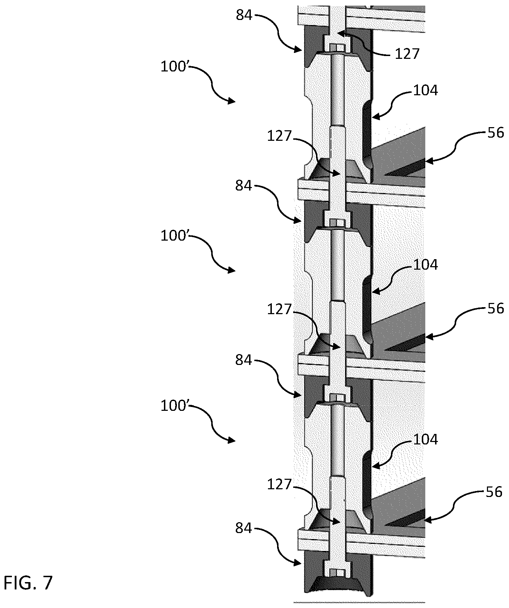

Referring now to FIGS. 6A and 6B, an alternative embodiment of a spacer 100' according to the present disclosure is shown. In this embodiment, the stacking posts 104 include the centering tip 102 and the threaded opening 124 extends completely through the posts 104. The posts 104 further include an alignment end 121 having an interior surface 123. The spacer 100' further includes at least one bolt 127 which includes a threaded shaft 129 and a head 131. As shown in FIG. 6A, the bolt 127 may be passed through an opening 133 formed in the alignment feature 84 and through openings 135 formed through the base 58 and the frame 62 in this example. The head 131 of the bolt 127 may seat within a recess 137 formed in the alignment feature 84 as the threaded shaft 129 is threaded into the threaded opening 124 of the post 104. In this manner, the alignment feature 84 and the post 104 may be simultaneously attached to the tray 56. A threaded, headless bolt (not shown) may be partially threaded into the threaded opening 124 of one post 104 and the alignment end 121 of another post 104 may be threaded onto the headless bolt, thereby permitting the posts 104 to be stacked and secured to one another. FIG. 6B shows an example of a tray 56 including a plurality of spacers 100' according to this embodiment. FIG. 7 shows a plurality of trays 56 stacked on top of one another using the alignment features 84, stacking posts 104 and bolts 127 of the spacers 100'. In this embodiment or any of the embodiments discussed herein, the alignment receivers 84 may be formed from Acetal (polyoxymethylene or POM), a high strength, low friction engineering plastic that has excellent wear properties in both wet and dry environments.

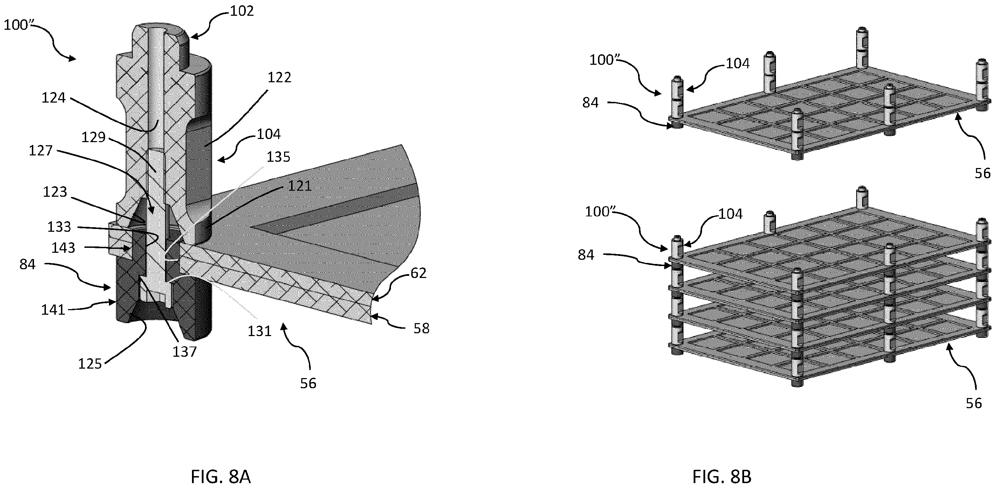

Yet another embodiment of a spacer according to the present disclosure is depicted in FIG. 8A. In this embodiment, the stacking posts 104 of the spacer 100" include the centering tip 102 and the threaded opening 124 extends completely through the posts 104. The posts 104 further include an alignment end 121 having an interior surface 123. The spacer 100" further includes at least one bolt 127 which includes a threaded shaft 129 and a head 131. As shown in FIG. 8A, the bolt 127 may be passed through an opening 133 formed in the alignment feature 84 and through openings 135 formed through the base 58 and the frame 62 in this example. As shown, alignment feature 84 includes a base 141 and an extension 143. In FIG. 8A the extension 143 is shown extending through the openings 135 through the base 58 and the frame 62. The head 131 of the bolt 127 may seat within a recess 137 formed in the alignment feature 84 as the threaded shaft 129 is threaded into the threaded opening 124 of the post 104. In this manner, the alignment feature 84 and the post 104 may be simultaneously attached to the tray 56.

A threaded, headless bolt (not shown) may be partially threaded into the threaded opening 124 of one post 104 and the alignment end 121 of another post 104 may be threaded onto the headless bolt, thereby permitting the posts 104 to be stacked and secured to one another as shown with the tray 56 in the middle of FIG. 8B. The lower portion of FIG. 8B shows a plurality of trays 56 stacked on one another using the alignment features 84, stacking posts 104 and bolts 127 of the spacers 100". More specifically, the centering tips 102 of the stacking posts 104 attached to a lower tray 56 are received by the bases 141 of the alignment features 84 attached to an upper tray 56 such that the stack of trays 56 are aligned.

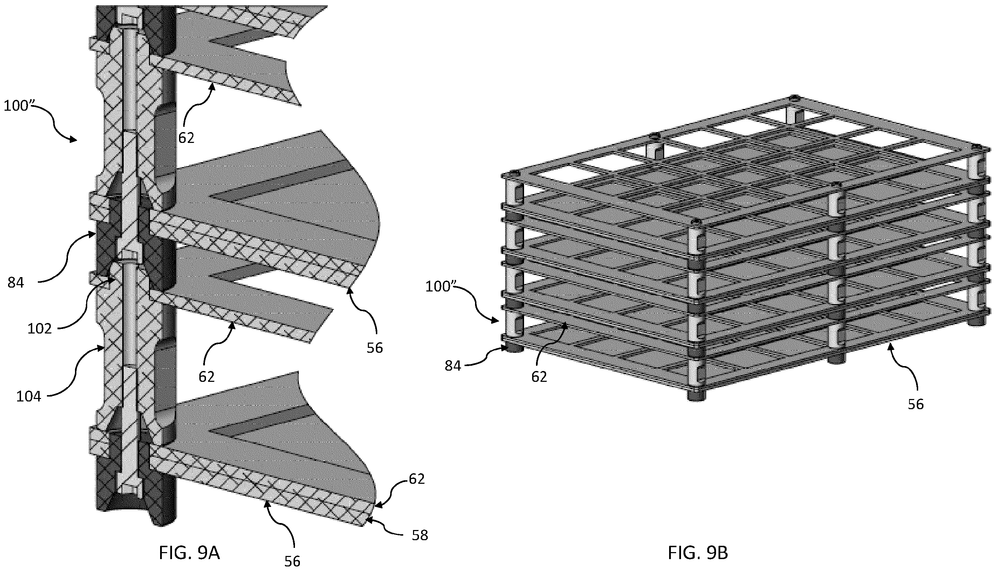

FIGS. 9A and 9B shown spacers 100" in a different configuration. In this example, an intermediate frame 62 is stacked onto the centering tips 102 of the spacers 100" to better support taller or narrower workpieces 109. The centering tips 102 are long enough to extend through the thickness of the intermediate frame 62 and still engage the inner surface 125 of the base 141 of the corresponding alignment feature 84.

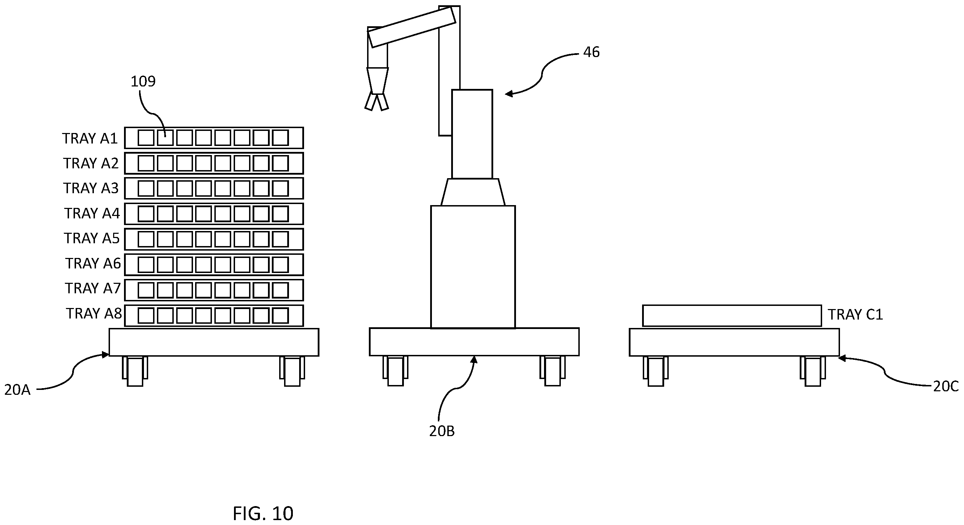

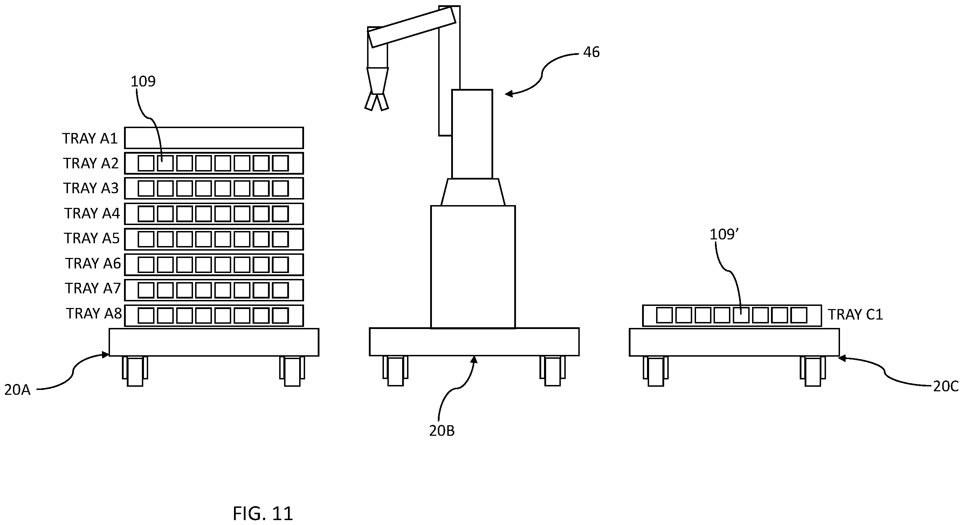

Referring now to the sequence of actions depicted in FIGS. 10-19, a process of unloading workpieces 109 from an infeed support 20A for processing, and then loading the processed workpieces 109' onto an outfeed support 20C is depicted. In FIG. 10, an infeed support 20A is shown with a stack of trays labeled A1-A8. All of the trays A1-A8 are loaded with workpieces 109. The robot 46 removes a workpiece 109 from the top tray A1 and places the workpiece 109 in the workspace 16 of the processing machine 12 (see FIG. 1) for processing. After the workpiece 109 is processed, the robot 46 removes the processed workpiece 109' from the processing machine 12 and loads it into a pocket 92 of an empty tray C1 positioned on the outfeed support 20C. Eventually, all of the workpieces 109 are removed from the tray Al, processed, and loaded as processed workpieces 109' into the tray C1. This is shown in FIG. 11.

While the example depicted in FIGS. 10-19 assumes that the infeed support 20A carries a stack of trays A1-A8 loaded with workpieces 109, it should be understood that in other examples the support 20A may carry a plurality of empty trays A1-A8 and outfeed support 20C may initially carry no trays. One example of this is when a lathe bar feeder is used with a lathe as the processing machine 12. The bar feeder indexes bar stock into the lathe for processing. The lathe engages the stock with a sub-spindle and runs a cut off cycle. After transferring an empty tray (e.g., tray A1) from the support 20A to the outfeed support 20C (assuming the outfeed support 20C initially carries no trays), the robot 46 would then enter the lathe, remove the finished part from the sub-spindle and place it in the empty tray A1 on the outfeed support 20C. This process would continue until the tray A1 is full of finished parts. Then the robot 46 would remove another empty tray A2 from the support 20A and stack it onto tray A1 on outfeed cart 20C and continue the process.

It should further be understood that in other applications an outfeed cart may not be used at all. Instead, an alternative device is used for outfeed of processed parts. For example, in some applications a conveyor may move parts out from the processing machine 12, or a transfer robot may move parts to a palletizer or transfer them to another processing machine 12 for subsequent processing. All of these applications are contemplated by the present disclosure.

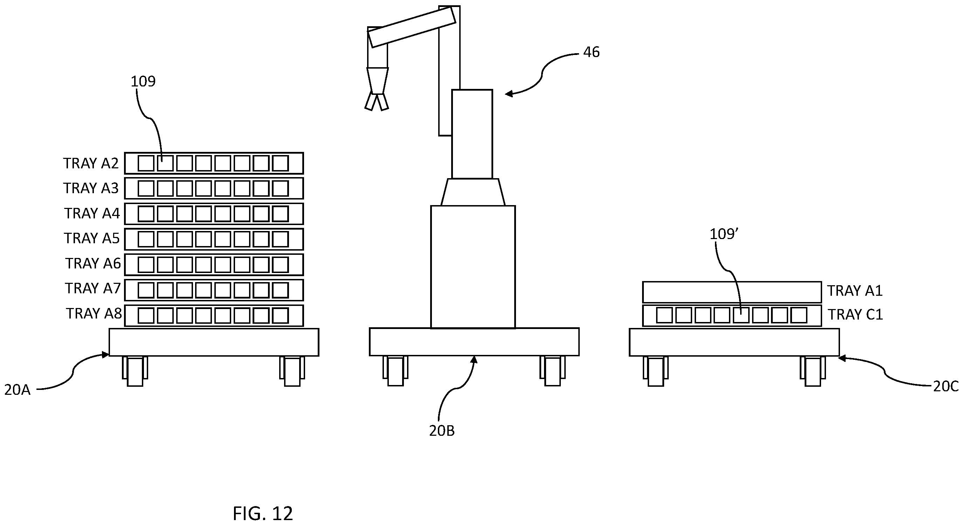

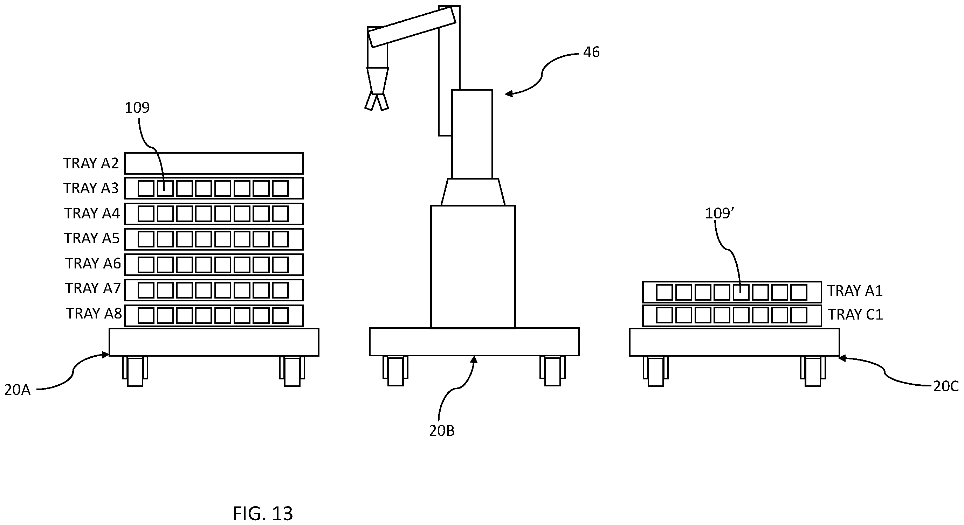

Returning to the example depicted in FIGS. 10-19, after all of the workpieces 109 are removed from tray Al, the robot 46 lifts the empty tray A1 and stacks it on top of the tray C 1 on the outfeed support 20C as shown in FIG. 12. The manner of lifting and moving empty trays such as tray A1 is described in further detail herein. The robot 46 then begins removing workpieces 109 from the tray A2 of the infeed support 20A, placing them into the processing machine 12 for processing, removing them from the processing machine once processed, and loading the processed workpieces 109' into the tray A1. Eventually, all of the workpieces 109 are removed from the tray A2, processed, and loaded as processed workpieces 109' into the tray A1 stacked on the tray C1 on the outfeed support 20C. This is shown in FIG. 13.

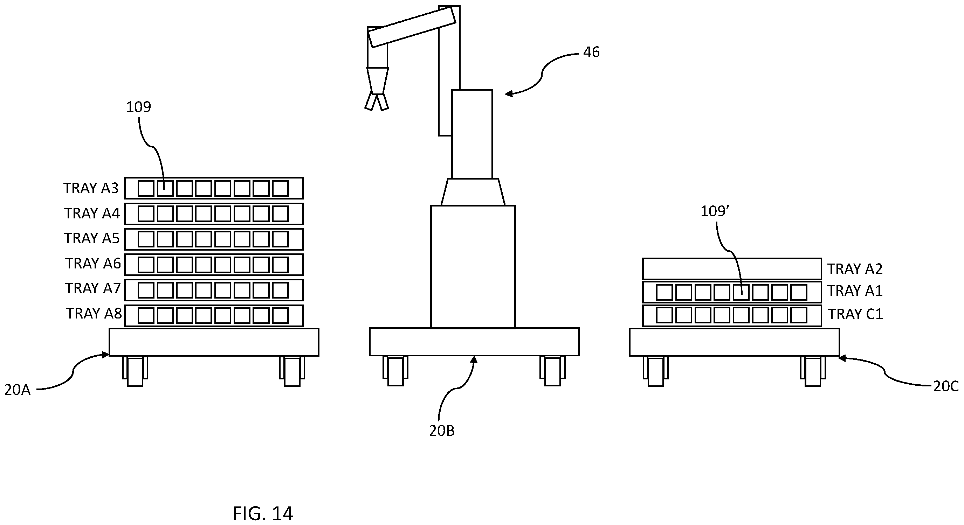

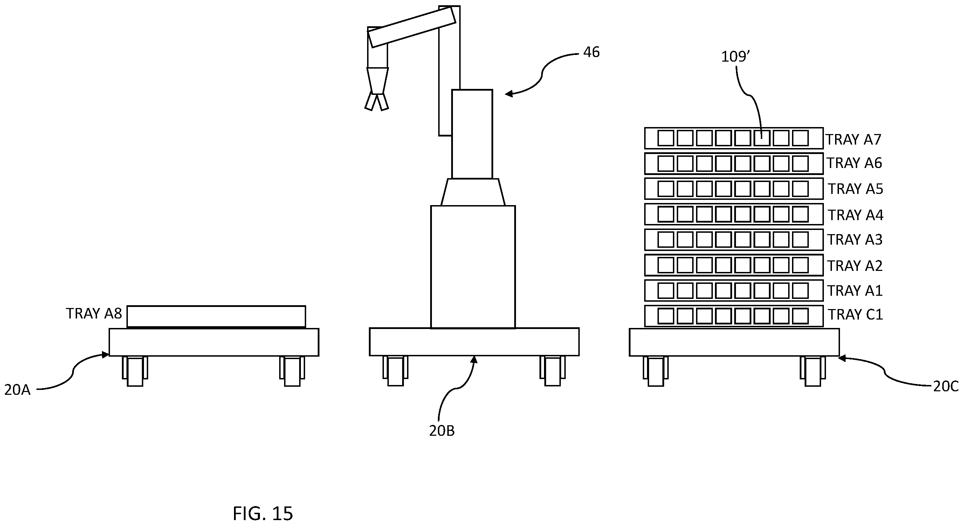

Again, the robot 46 then lifts the empty tray A2 from the infeed support 20A and stacks it on top of the tray A1 on the outfeed support 20C as shown in FIG. 14. This process continues until all of the workpieces 109 are removed from the trays A3-A8, processed by the processing machine 12, each empty tray A3-A7 being stacked onto the outfeed support 20C, and the processed workpieces 109' being loaded into the trays A3-A7. This is shown in FIG. 15. The processed workpieces 109' in trays C1 and A1-A7 on the outfeed support 20C may then be moved to a different location. For example, the support 20C may be moved manually or automatically (using a conveyor system, an autonomous guided vehicle, an autonomous mobile robot, etc.) to a different processing machine 12 to function as an infeed support for that processing machine 12, which may perform an additional process on the processed workpieces 109'. In this manner, the supports 20 may be moved from processing machine 12 to processing machine 12 to perform a plurality of processes on the workpieces in an automated or semi-automated processing line.

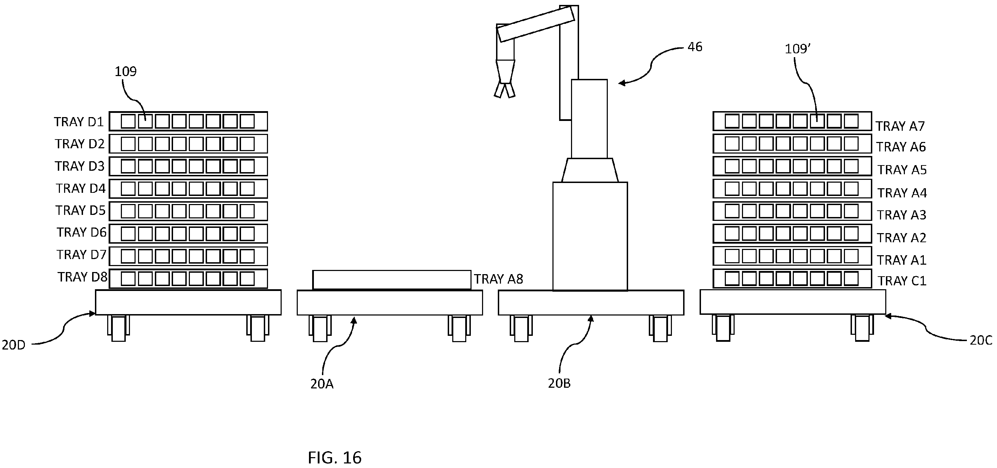

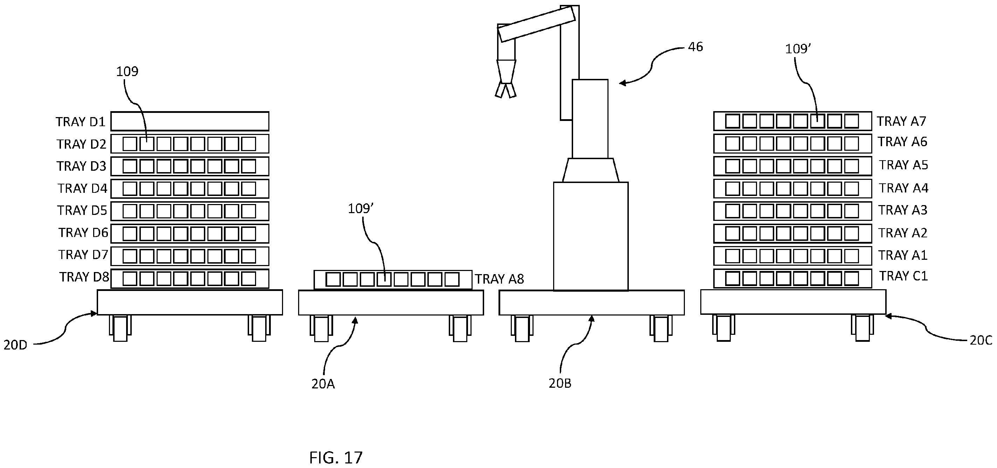

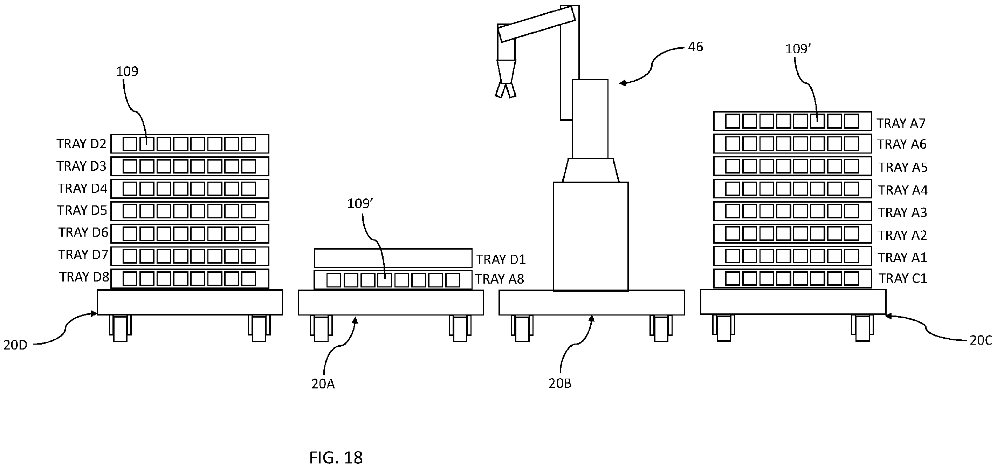

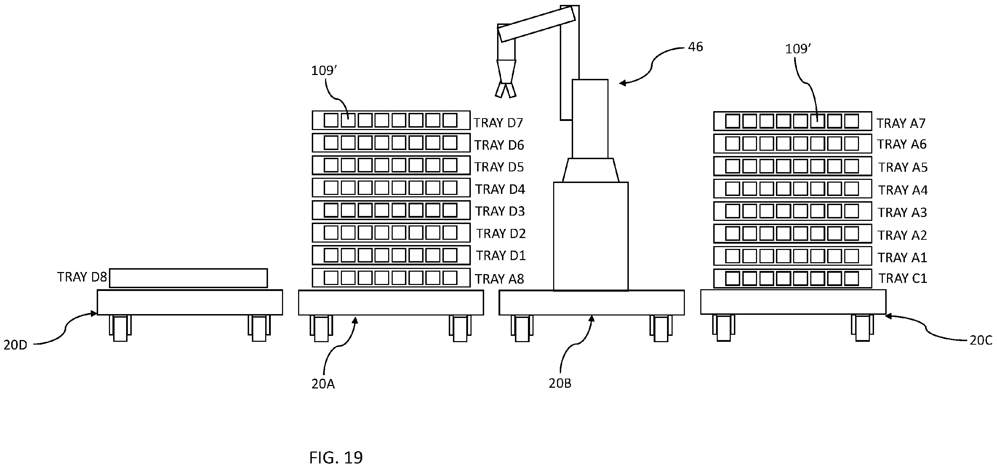

At this point, the support 20A may now function as an outfeed support. Another support 20D with trays D1-D8 full of workpieces 109 may be present or moved into position adjacent the support 20A. This is shown in FIG. 16. Now, the support 20D is the infeed support and the support 20A is the outfeed support. The robot 46 removes workpieces 109 from the tray D1 of the support 20D, places them into the processing machine 12 for processing, removes the processed workpieces 109' from the processing machine 12, and places them into the tray A8 on the outfeed support 20A. Eventually, all of the workpieces 109 are removed from the tray D1, processed, and loaded as processed workpieces 109' into the tray A8 on the outfeed support 20A. This is shown in FIG. 17. The robot 46 then lifts the empty tray D1 off of the infeed support 20D and stacks it onto the tray A8 on the outfeed support 20A. This is shown in FIG. 18. This process is repeated until all of the workpieces 109 are processed and all of the trays D2-D8 are transferred to the outfeed support 20A and loaded with processed workpieces 109'. This is shown in FIG. 19. It should be understood that the above described process of emptying and transferring trays may be repeated and scaled to as many supports 20 as the available space permits and that the robot 46 can reach.

Referring now to FIGS. 20A, B, an example configuration for lifting and moving trays 56 is described. FIG. 20A is the enlarged portion "A" of FIG. 3 and depicts the hook 96 and portions of the frame 62 of the tray 56. FIG. 20B shows an embodiment of a wrist attachment 146 for engaging the hook 96 and lifting the tray 56. Referring first to FIG. 20A, the hook 96 includes an upper wall 128 having a first segment 130 and a second segment 132 extending perpendicularly relative to the first segment 130, a vertical wall 134 having a first segment 136 extending perpendicularly relative to a plane including the upper wall 128 and a second segment 138 extending perpendicularly relative to the first segment 136 and relative to the plane including the upper wall 128, and a mounting wall 140 having a first segment 142 extending perpendicularly relative to the first segment 136 of the vertical wall 134 and parallel to the plane including the upper wall 128 and a second segment 144 extending perpendicularly relative to the second segment 138 of the vertical wall 134, perpendicularly relative to the first segment 142 and parallel to the plane including the upper wall 128. The first segment 142 of the mounting wall 140 is attached to the width segment 88 of the frame 62 of the tray 56 using any suitable attachment method such as fasteners, welding, etc. Similarly, the second segment 144 of the mounting wall 140 is attached to the length segment 90 of the frame 62 using any suitable attachment method. In this manner, the hook 96 is connected to the frame 62 at an intersection of the width segment 88 and the length segment 90. The vertical wall 134 supports the upper wall 128 at a spaced apart distance from the frame 62 to provide for engagement with an interlock hook 166 of the wrist attachment 146 as described below for lifting and moving the tray 56.

As shown in FIG. 20B, the wrist attachment 146 according to one embodiment of the present disclosure generally includes a side plate 148, a connecting plate 150, an interlock hook 166 and an engagement pad 168. The side plate 148 is generally planar and rectangular in shape, and includes an outer surface 152, an inner surface 154, a first side edge 156, a second side edge 158, an outer edge 160 and an inner edge 162. In the depicted embodiment, the side edges 156, 158 are substantially parallel to one another and substantially perpendicular to the outer edge 160. The connecting plate 150 includes an outer surface 153, an inner surface 155, a first side edge 157, a second side edge 159, an outer edge 161, and an inner edge 163. The side edges 157, 159 are substantially parallel to one another and substantially perpendicular to the outer edge 160 of the side plate 148. The inner edge 162 of the side plate 148 is integral with the inner edge 163 of the connecting plate 150. The outer edge 161 of the connecting plate 150 is curved to substantially match an outer dimension of a robot wrist 53 as is described below. A plurality of apertures 164 extend through the connecting plate 150 for attachment of the connecting plate 150 (and therefore the wrist attachment 146) to the robot wrist 53.

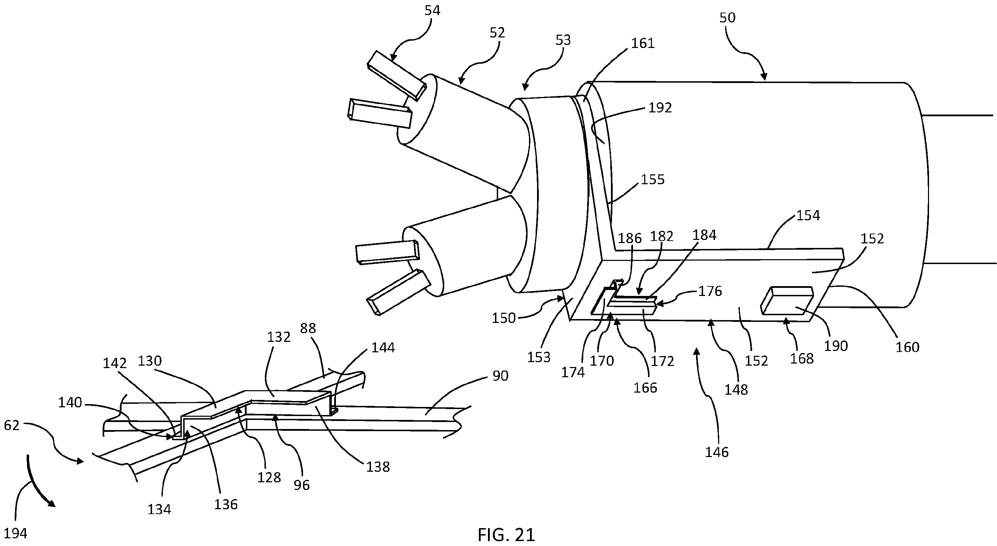

The interlock hook 166 according to one embodiment includes an upper wall 170 having a having a first segment 172 and a second segment 174 extending perpendicularly relative to the first segment 172, a vertical wall 176 having a first segment 178 extending perpendicularly relative to a plane including the upper wall 170 and a second segment 180 extending perpendicularly relative to the first segment 178 and relative to the plane including the upper wall 170. The interlock hook 166 also includes a mounting wall 182 having a first segment 184 extending perpendicularly relative to the first segment 178 of the vertical wall 176 and parallel to the plane including the upper wall 170 and a second segment 186 (FIG. 21) extending perpendicularly relative to the second segment 180 of the vertical wall 176, perpendicularly relative to the first segment 184 and parallel to the plane including the upper wall 170.

The first segment 184 and the second segment 186 of the mounting wall 182 are attached to the outer surface 152 of the side plate 148 of the wrist attachment 146 using any suitable attachment method such as fasteners, welding, etc. The mounting wall 182 is attached to the outer surface 152 of the side plate 148 at a location adjacent to the intersection between the first side edge 156 of the side plate 148 and the inner edge 162 of the side plate 148. In this manner, the first segment 172 of the upper wall 170 of the interlock hook 166 extends away from the first segment 178 of the vertical wall 176 toward the first side edge 156 of the side plate 148 in substantially parallel relationship to the outer surface 152 of the side plate 148 and the second segment 174 of the upper wall 170 extends away from the second segment 180 of the vertical wall 176 toward the inner edge 162 of the side plate 148 in substantially parallel relationship to the outer surface 152 of the side plate 148. As such, the vertical wall 176 supports the upper wall 170 at a spaced apart distance from the outer surface 152 of the side plate 148 to provide for engagement with the hook 96 attached to the frame 62 of the tray 56 as described below for lifting and moving the tray 56.

The engagement pad 168 depicted in FIG. 20B is substantially cuboid in shape with an inner surface 188 and an outer surface 190. The inner surface 188 is attached to the outer surface 152 of the side plate 148 using any suitable attachment mechanism such as adhesive, fasteners, etc. The engagement pad 168 is attached to the side plate 148 at a location substantially adjacent the intersection between the outer edge 160 of the side plate 148 and the first side edge 156 of the side plate 148. In alternative embodiments, the engagement pad 168 may extend along substantially the entire width of the side plate 148 between the first side edge 156 and the second side edge 158. The engagement pad 168 may be formed from a resilient material such as rubber, foam, etc. As is further described below, when the interlock hook 166 is brought into engagement with the hook 96 attached to the frame 62 of the tray 56, the outer surface 190 of the engagement pad 168 engages the length segment 90 of the frame 62.

Referring now to FIG. 21, the wrist attachment 146 is shown attached to the wrist 53 of an arm segment 50 of the robot 46. In certain embodiments, the grippers 52 of the robot 46 are capable of lifting the trays 56 used in the system 10 and moving the trays 56 from an infeed support 20 to an outfeed support 20. In those applications, the wrist attachment 146 (and the hook 96) are not necessary. However, in many applications the grippers 52 of the robot 46 are configured with fingers 54 that are not capable of gripping the tray 56 because they are configured for gripping specific workpieces or are unable to maintain the tray 56 in a stable orientation while transporting the tray 56 from one support 20 to another support 20. Accordingly, it may be desirable to provide a fixed engagement structure such as the interlock hook 166 attached to the wrist 53 of the robot 46 which is specifically designed to engage a fixed engagement structure on the tray 56, such as the hook 96. In this manner, any type of gripper 52 may be used on the robot 46 without regard for its ability to transport trays 56.

As shown, the connecting plate 150 of the wrist attachment 146 is attached to an end surface 192 of the robot arm segment 50. In one embodiment, the wrist attachment 146 is sandwiched between the wrist 53 of the robot 46 and the end surface 192 of the arm segment 50. The wrist 53 may be attached to the connecting plate 150 and the robot arm segment 50 using bolts or other fasteners that extend through the apertures 164 (FIG. 20B) of the connecting plate 150 and are threaded into openings (not shown) on the end surface 192 of the arm segment 50. The side plate 148 is thus positioned adjacent an outer surface of the arm segment 50. To lift trays 56, the arm segment 50 is moved to position the interlock hook 166 into engagement with the hook 96 attached to the frame 62. Specifically, the upper wall 170 of the interlock hook 166 is moved under the upper wall 128 of the hook 96 and the engagement pad 168 is moved into engagement with the length segment 90 of the frame 62. The robot arm 50 is then moved upwardly and because the hook 96 is offset from the center line 98 of the tray 56, torque is generated about the center line 98 by the weight of the tray 56 as indicated by arrow 194 (see also, FIG. 3). In this manner, the weight of the tray 56 balances against the engagement pad 168 to ensure that the tray 56 remains balanced and secure as the robot 46 moves the tray 56 from one support 20 to another support 20.

In other embodiments of the present disclosure, alternative mechanisms may be used for engaging and moving the tray 56 (i.e., instead of the hook 96 and the interlock hook 166). For example, one of the robot 46 or the tray 56 may include a key structure, and the other may include a keyhole structure. Alternatively, a spring-loaded latch may be used that is mechanically (e.g., pneumatically) unlatched by an actuator or force applied by the robot 46. In yet another alternative, a mechanically actuated latch may be used for locking and unlocking to a pin or hook (e.g., a pneumatic piston lock). Alternatively, the robot 46 may magnetically engage and disengage the tray 56. These mating structures may be part of the tray 56 or part of the spacer 100. Rather than being part of the spacer 100, the mating structure (e.g., the pin/hook example mentioned above) could be bolted between stacking posts 104. Any and all of these alternatives are contemplated by the present disclosure.

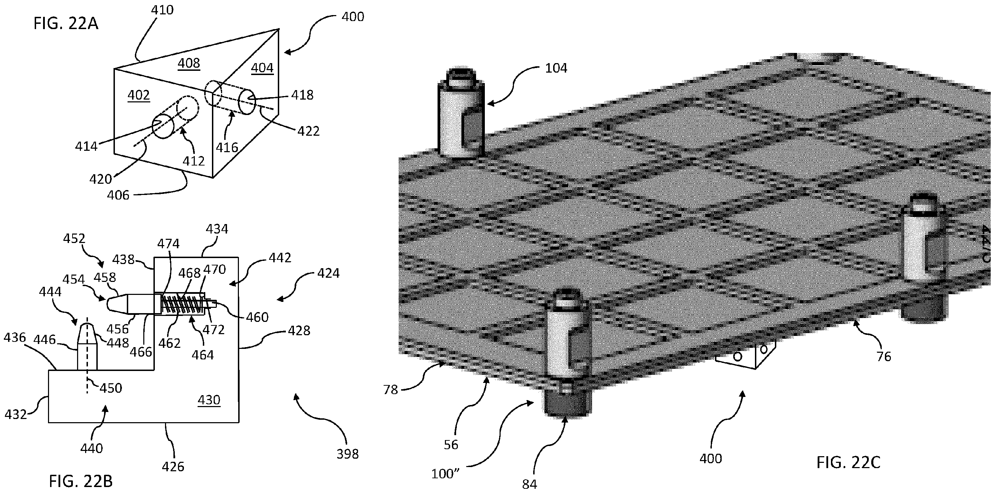

One example alternative for engaging and moving a tray 56 is the engagement mechanism 398 depicted in FIGS. 22A-C. As shown in FIG. 22C, in this example an engagement block 400 is attached to the underside of the base 58 of the tray 56 adjacent the side edge 76 at location that is offset from the end edge 78 of the base 58. Referring to FIG. 22A, the engagement block 400 includes a first outer surface 402, a second outer surface 404, a lower surface 406, an upper surface 408 and an inner surface 410. The first outer surface 402 is substantially perpendicular to the second outer surface 404, the lower surface 406 and the upper surface 408. A bore 412 is formed into the first outer surface 402 and includes an opening 414. A similar bore 416 is formed into the second outer surface 404 and includes an opening 418. In this example, the bore 412 has a longitudinal axis 420 that is perpendicular to the first outer surface 402 and the bore 414 has a longitudinal axis 422 that is perpendicular to the second outer surface 404. While the bores 412, 416 are described as being perpendicular to one another, it should be understood that they may have any desired non-parallel orientation relative to one another. As shown in FIG. 22C, in this example embodiment the engagement block 400 has a height (i.e., the distance between the lower surface 406 and the upper surface 408) that is less than the height of the alignment features 84.

The engagement mechanism 398 also includes mating block 424 as shown in FIG. 22B which is attached to the robot 46. The mating block 424 includes a first outer surface 426, a second outer surface 428, a lower surface (not shown), an upper surface 430, a first end surface 432, a second end surface 434, a first inner surface 436 and a second inner surface 438. In this manner, the mating block 424 includes a first portion 440 and a second portion 442. A fixed pin 444 extends from the first inner surface 436 of the first portion 440 of the mating block 424. The fixed pin 444 includes a shaft 446 and a tapered end 448. The fixed pin 444 extends perpendicularly from the first inner surface 436 and has a longitudinal central axis 450. The longitudinal central axis 450 is spaced apart from the intersection between the first inner surface 436 and the second inner surface 438 by a distance that is equal to the distance between the longitudinal axis 420 of the bore 412 of the engagement block 400 and the intersection between the first outer surface 402 and the second outer surface 404 of the engagement block 400. In other words, when the robot 42 moves the second inner surface 436 of the mating block 424 into engagement with the second outer surface 404 of the engagement block 400, the fixed pin 444 is aligned with the bore 412.

The mating block 424 also includes a latch assembly 452 disposed on the second portion 442 of the mating block 424. The latch assembly 452 includes a movable pin 454 including a shaft 456 and a tapered end 458, a rod 460 connected to the shaft 456, and a biasing member 462. The latch assembly 452 is positioned in a bore 464 formed into the second inner surface 438 of the second portion 442 of the mating block 424. More specifically, the bore 464 includes an opening 466 in the second inner surface 438, a side wall 468, a shoulder 470 and an rod opening 472. The biasing member 462 in this embodiment is a coil spring. The rod 460 extends through the central portion of the biasing member 462. One end of the biasing member 462 engages an end 474 of the shaft 456 of the movable pin 454, and another end of the biasing member 462 engages the shoulder 470 of the bore 464. The rod 460 is retractable by an actuator (not shown) along its longitudinal axis to move the movable pin 454 to a retracted position wherein the pin 454 is substantially entirely disposed within the bore 464, thereby compressing the biasing member 462. The actuator may be mechanical, pneumatic, electrical or magnetic. When the actuator is deactivated, the biasing member 462 expands causing the pin 454 to move to an extended position as shown in FIG. 22B. Thus, if the power source to the actuator is lost or interrupted, the movable pin 454 remains in the normally extended position.

In operation, the robot 42 is programmed or learns the mounting location of the engagement block 400 on the tray 56. When a tray 56 is to be picked up and moved to another location, the robot 42 activates the actuator to cause the movable pin 454 to move to the retracted position and moves the mating block 424 into engagement with the engagement block 400 such that the fixed pin 444 is inserted into the bore 412. In this position, the movable pin 454, retracted in the bore 464, is aligned with the bore 416 on the second outer surface 404 of the engagement block 400. The robot 42 then deactivates the actuator, which permits the biasing member 464 to move the movable pin 454 into the extended position, which inserts the moveable pin 454 into the bore 416. The mating block 424 is thus fixed to the engagement block 400 by the fixed pin 444 and the movable pin 454. The robot 42 then moves the tray 56 to desired location, activates the actuator to move the movable pin 454 into the retracted position, and moves the mating block 424 to withdraw the fixed pin 444 from the bore 412, thereby disengaging the mating block 424 from the engagement block 400.

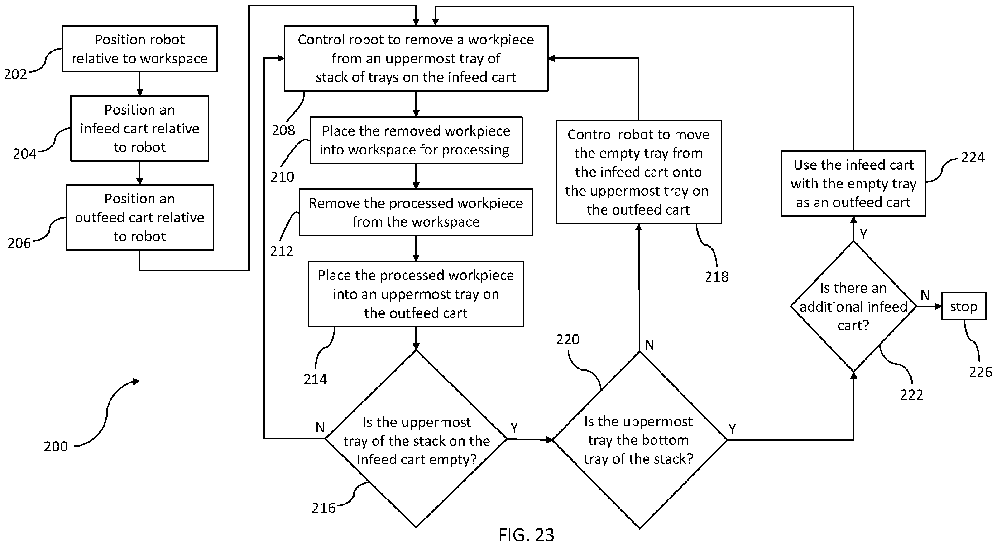

Referring now to FIG. 23, a method 200 of processing workpieces using a tray system 10 according to the present disclosure is shown. As shown, at step 202 a robot 46 is positioned in a predetermined location relative to the workspace 16 of a processing machine 12. This location may be the dock 24B of the docking station 18 as described above with reference to FIG. 1. Alternatively, the robot 46 may be mounted in a fixed position relative to the processing machine 12. At step 204, an infeed support 20 is positioned in a predetermined location relative to the robot 46. This location may be dock 24A as described above. At step 206, an outfeed support 20 is positioned in a predetermined location relative to the robot 46. This location may be dock 24C as described above. At this point all of the components (supports 20, robot 46 and workspace 16) are in relative locations and orientations that are known by controller 14 of processing machine 12.

In other embodiments, the docking station 18 is omitted and other methods for orienting the supports 20 relative to the processing machine 12 and the robot 46 are used. For example, a support 20 may be moved manually to a position near the robot 46 and the wheels 38 on the support 20 may be locked to prevent it from moving. The robot 46 and the controller 14 may then be used to locate the position and orientation of the support 20. The robot program may then automatically adjust itself accordingly to remove the workpieces from the trays 56 on the support 20 and move the trays 56 in the manner described below. The location and orientation of the support 20 may be determined either by teaching positions with the robot 46 or by running an automatic cycle using robot force sensors to find the location of the support 20, or a combination of the two, where an operator moves the gripper 52 of the robot 46, for example, close to the support 20 and the robot 46 then executes an automatic cycle to find the support 20 using force sensing capabilities of the robot 46. In a further alternative, sensors or cameras may be used to detect and/or determine the location and orientation of the support 20 relative to the robot 46.

At step 208 the robot 46 begins moving workpieces from the infeed support 20 to the workspace 16, and moving processed workpieces from the workspace 16 to the outfeed support 20. Specifically, at step 208 the robot 46 is controlled to remove a workpiece from an uppermost tray 56 of a stack of trays 56 stacked on the infeed support 20. An example of this is depicted in FIG. 8. At step 210 the removed workpiece is placed by the robot 46 into the workspace 16 for processing by the processing machine 12. After the workpiece is processed, the robot 46 removes the processed workpiece at step 212 from the workspace 16. At step 214 the robot 46 is controlled to place the processed workpiece into an uppermost tray 56 on the outfeed support 20 (e.g., empty tray C1 shown in FIG. 10).

It should be understood that while a robot 46 including a single gripper 52 is shown and described herein, the present disclosure contemplates use of a robot 46 having two or more grippers 52 mounted on corresponding arm segments 50. For example, the robot 46 may include two grippers 52 and the steps 208, 210, 212 and 214 of FIG. 23 may be performed by the two grippers 52. More specifically, a first gripper 52 may pick up a workpiece 109 from infeed support 20 while the processing machine 12 is processing another workpiece 109 and stage the workpiece 109 in front of the processing machine 12. When the workpiece 109 in the processing machine 12 is complete, the robot 46 may use the second gripper 52 to enter the processing machine 12, exchange the processed workpiece 109' with the unprocessed workpiece 109 and exit the processing machine 12 with the processed workpiece 109'. As such, steps 208, 210, 212, 214 and step 218 are not intended to be limited to use of a robot 46 with a single gripper 52.

At step 216 the controller 14 determines whether the uppermost tray 56 of the stack of trays 56 on the infeed support 20 is empty. If not, then the process returns to step 208 and repeats steps 210, 212 and 214. If the uppermost tray 56 of the stack of trays 56 on the infeed support 20 is empty (as depicted in the example of FIG. 11), then the controller 14 determines at step 220 whether the uppermost tray 56 is the bottom tray 56 on the infeed support 20 (i.e., the tray 56 stacked directly onto the support 20). If the tray 56 is not the bottom tray 56, then the controller 14 controls the robot 46 at step 218 to move the empty tray 56 from the infeed support 20 onto the uppermost tray 56 on the outfeed support 20. An example of this is depicted in FIG. 12. After the robot 46 moves the tray 56 to the outfeed support 20, the process returns to step 208 and repeats step 210, 212, 214, 216 and 220. In other words, the robot 46 is controlled to continue moving workpieces and transferring empty trays 56 from the infeed support 20 to the outfeed support 20 as shown in the example of FIGS. 13 and 14. If the empty, uppermost tray 56 of the stack of trays 56 on the infeed support 20 is the bottom tray 56 as shown in FIG. 15, then the controller 14 determines at step 222 whether an additional infeed support 20 is present. If not, then the process stops at step 226. If an additional infeed support 20 is present, then the controller 14 determines at step 224 to use the previous infeed support 20 as an outfeed support 20 and the additional infeed support 20 as the active infeed support 20. The process is then returned to step 208 where workpieces are removed by the robot 46 from the additional infeed support 20 and placed onto the previous infeed support 20 which now functions as an outfeed support 20.

It should be understood that according to embodiments of the disclosure, the trays 56 need not be stacked onto moveable objects such as supports 20. Instead, stacks of trays 56 may be presented to the robot 46 on a pallet or other supporting surface and empty trays 56 may be stacked onto another pallet or other supporting surface. Also, as should be apparent from the foregoing, the spacing and size of the pockets 92 of the frame 62 of a tray 56 containing workpieces 109 at the top of a stack of trays 56 on an infeed support 20 should be capable of accommodating the size of processed workpieces 109' from the next lower tray 56 in the stack. In other embodiments, an additional support 20 may be provided with a stack of empty trays 56 that matches the trays 56 on the infeed support 20. Those empty trays 20 may be loaded onto the outfeed support 20. In this embodiment, an additional support 20 would be needed to receive the empty trays 56 from the infeed support 20 since they will not be used to receive processed workpieces 109'.

As should be further understood from the foregoing, the controller 14 of the processing machine 12 or a separate controller knows, through user input or by means of detection and learning, the locations of the infeed support(s) 20 and the outfeed support 20, the spacing of the pockets 92 in each tray 56 on the supports 20, the dimensions of the workpieces 109 in each tray 56, and the vertical distance or height between adjacent stacked trays 56. This information may be saved and recalled for subsequent processing. Alternatively, the data may be stored on the supports 20 and transmitted to the controller 14 using RFID, QR code or other similar technology.

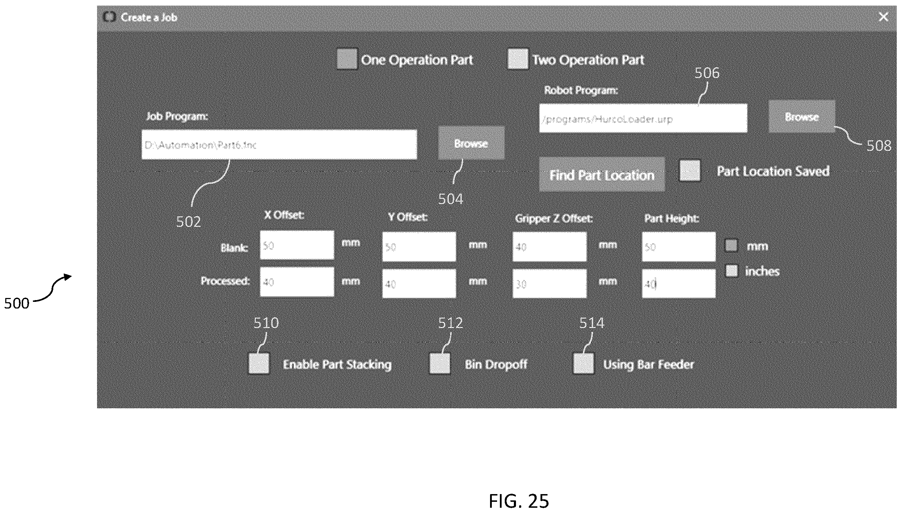

Referring now to FIG. 25, an interface 500 generated by job manager software of the controller 14 is shown for setting up jobs for processing workpieces 109 by the processing machine 12. The configuration and operation of the job manager software for setting up and operating the jobs is similar to that described in the `895 Application. The interface 500 includes a job program field 502 which allows the user to specify the processing machine program associated with the job. Alternatively, the user may activate the browse icon 504 to search for previously saved job programs. Similarly, the user may input a robot program in the robot program field 506 or search for saved robot programs by activating the browse icon 508. The interface 500 also permits the user to specify the infeed and outfeed stock material dimensions, and all other necessary auxiliary parameters for the robot 42 and the processing machine 12 to handle and process the workpieces 109 (e.g., part weight, work holding parameters, part cleaning parameters, etc.). The user may also specify how many and where the unprocessed workpieces 109 are placed in the tray 56. It should be understood that each tray 56 may contain one or more types of workpieces 109 that can be queued for processing. Even though part stacking is generally not necessary (a benefit of the system described herein) it is still possible and may occasionally be useful for situations where the production run only requires one tray and the system operates essentially like a table feeding system. The user may enable part stacking by activating icon 510. Activation of the bin dropoff icon 512 allows the user to select dropping processed workpieces 109' in a separate bin instead of loading the processed workpieces 109' into an outfeed tray 56 stack. This can be used for simplicity when bin dropping will not result in damage to the processed workpieces 109' and surface finish may not be a concern. The using bar feeder icon 514 is selected, typically for Lathe machines, when the unprocessed material is fed by a different system than by the tray stacking system described herein, but the processed workpieces 109' may nonetheless be placed onto an outfeed tray 56 stack in the manner described herein.

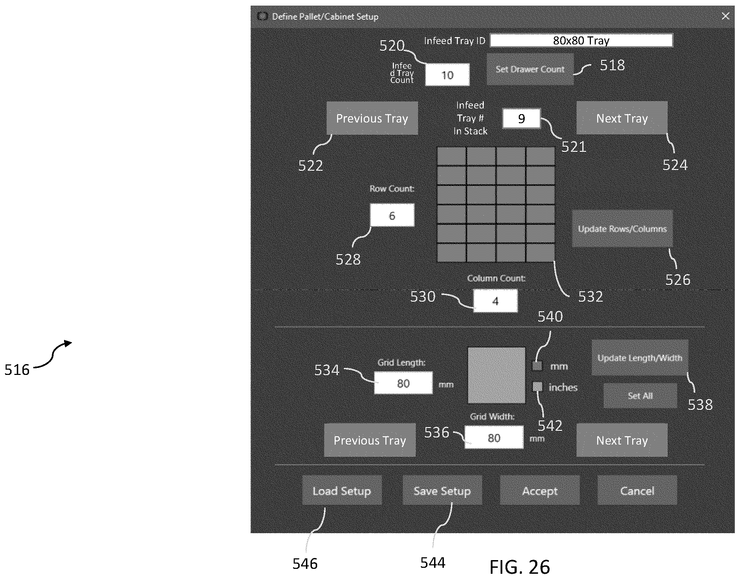

FIG. 26 depicts an interactive screenshot 516 generated by the job manager software to permit configuration of grid trays 56 in a tray system. As shown, an operator may set the number of infeed trays 56 by clicking on icon 518 and filling in field 520. The location of an infeed tray 56 in the tray stack can be specified by the user by filling in the infeed tray # in stack field 521. The operator can navigate from one tray 56 configuration to another using icons 522, 524. By clicking icon 526 and filling in fields 528 and 530, the operator can input the number of rows and columns tray 56 has been configured to include. Each tray 56 has a unique identifier which can be text, a number, a QR code, a barcode, or an RFID, for example. A depiction 532 of the physical grid tray 56 configuration is provided.

The operator can also update or define the actual length and width of pockets 92 of the tray 56 by filling in fields 534 and 536 and clicking on icon 538. Boxes 540 and 542 permit the operator to input the grid dimensions in millimeters or inches, respectively. Finally, the operator may save the tray configuration by clicking on icon 544 and proceed to define the next tray 56. Icon 546 permits the operator to load a previously defined tray configuration stored on memory accessible by controller 14.

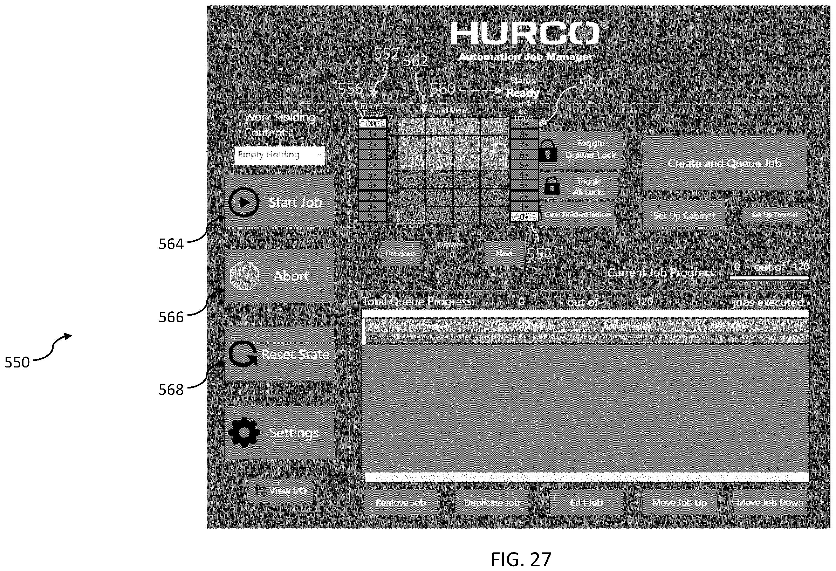

FIG. 27 depicts an interactive interface 550 generated by the job manager software for processing jobs. The interface 550 provides a visual representation 552 of the number of infeed trays 56 and a visual representation 554 of the number of outfeed trays 56. The highlighted tray representations 556 and 558 represent trays 56 that are currently being processed. The interface 550 also indicates the status 560 of the system and the grid view representation 562 provides a visual indication of the workpieces 109 being processed on the currently active tray 56. The operator starts the job by activating the start job icon 564, aborts a job by activating the abort icon 566 and resets the current state by activating the reset state icon 568.

It should be understood that while in the above examples, the infeed trays 56 and their associated jobs are defined using the job manager software upfront before running the system, the definitions of the infeed trays 56, their associated jobs and even the number of trays 56 to process can be defined remotely, outside of the job manager software, on a network, or be encoded or linked to in an RFID or QR code on the trays 56. When the job manager software is started, the system may search for and detect the RFID or QR code of upper most available tray 56 in the infeed stack and begin processing the job(s) in that tray 56. The system would then repeat until no further unprocessed trays 56 are detected in the infeed stack. The feature also allows for the possibility to use autonomous vehicles for the infeed and outfeed supports 20 for continual autonomous production of parts. The system would then simply wait until the infeed support 20 and the outfeed support 20 are present to begin processing jobs.

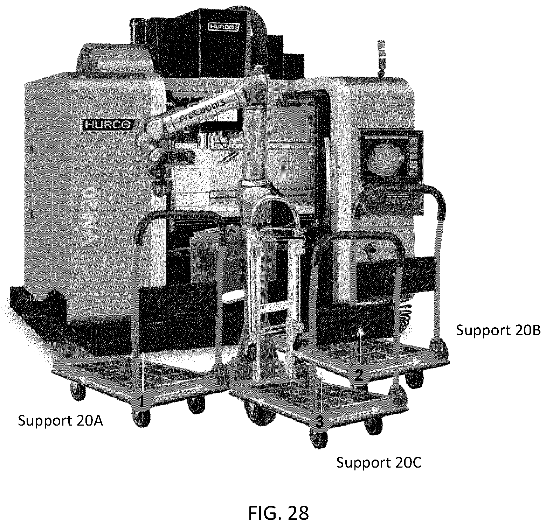

It should be further understood that the base location of the infeed support(s) 20 and the outfeed support(s) 20 is fixed and can be taught using the robot 46. This can be done by teaching the robot 46 the relative spatial location of fixed features on the supports 20, storing those locations to determine a fixed relative coordinate system on the support 20, then interpolating the relative locations of the stacked trays 56 based on the definitions of the trays 56 (i.e., dimensions and spacing between trays 56 in the stack). When locked in position, the infeed support 20 and the outfeed support 20 locations and orientations (of all supports 20 presently available in the system) are defined by coordinate systems relative to the robot base 48 which allows the system to compute the necessary joint positions of the robot 46 to pick and place the workpieces 109. This is shown in FIG. 28 where each support 20A-C has a defined coordinate system accordingly. Note that other means of determining the spatial location and orientation of the supports 20 are possible including but not limited to cameras, automatic probing touch cycles with the robot 46, or other sensory means.

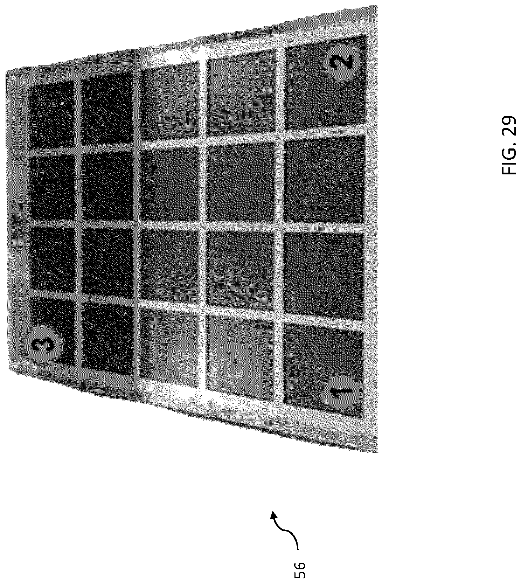

Alternatively, each tray 56 location and orientation can be taught using the robot 46 in a similar way. For example, FIG. 29 shows a 3-point calibration of the three corners of the grid tray 56 that can be used to establish the location and orientation of the grid tray 56 relative to the robot base 48 by teaching the three corners using the fingers 54 or other element of the robot 46 to touch the three points. For robots 46 with limited 3D spatial accuracy, it may be necessary to calibrate the 3D space where the trays 56 will stack using a calibration system relative to the base coordinate system of the support 20. One example would be to teach the three points discussed above for a fixed regular spacing of identical trays 56 and interpolate the tray 56 locations based on the tray 56 spacing and grid tray definition when running jobs.

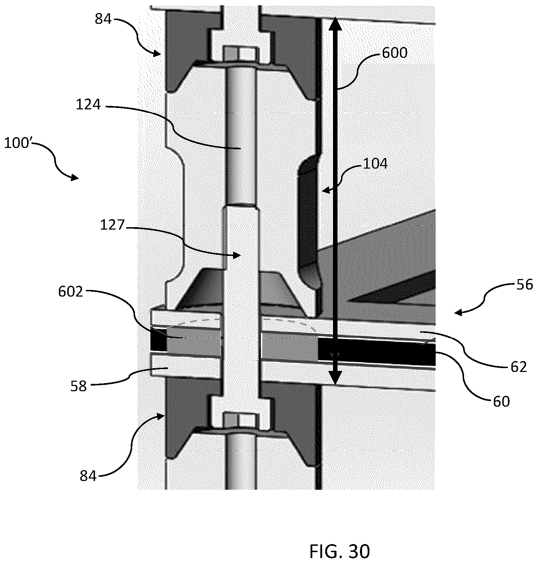

While calibrating the 3D space can be done by guiding the robot 46 to fixed points on the grid of each tray 56 in the stack, this process may be tedious and time-consuming. Alternatively, the design of the stacked trays 56 may have predetermined dimensions in the plane of the frame 62 and in the stacking height between trays 56. Referring to FIG. 30, for the stacking height 600 the robot 46 need only be provided with the number of stacking posts 104 that are installed between each tray 56, the thickness of the base 58 of the trays 56, the thickness of the frame 62 of the trays 56 and combined height of the stacking post(s) 104 and the alignment feature 84 of the spacers 100'. To avoid variability potentially introduced by the resilience of the pad 60, a solid spacer 602 can be placed between the base 58 and the frame 62 in a cut out portion of the pad 60. The bolt 127 is then passed through the spacer 600 and threaded into the threaded opening 124 of the stacking post 104. When the bolt 127 is firmly threaded into the stacking post 104, the force will not compress the pad 60 because the solid spacer 600 is in place.

The auto calibration cycle will rely on the fact that there is a fixed height 600 for all the stacked parts and fixed dimension of the trays 56 that will allow the system to establish a coordinate system and fixed points across the tray 56 to map and interpolate the robot positions to the calibrated 3D space. The spacing of the pockets 92 in the tray 56 can be programmed in the job manager software and will not affect the calibration cycle.

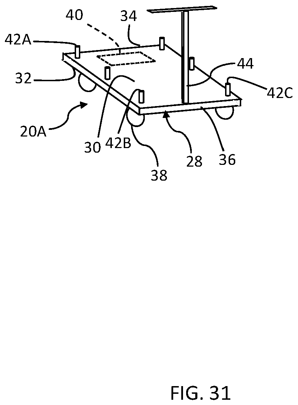

In certain embodiments, the base location of the docked support 20 is first taught to the robot 46. In the embodiment depicted in FIG. 31, the support 20 includes six alignment members 42 in the form of pins located in the identical locations as the spacers 100' of the trays 56. The location and orientation of the alignment members 42 will establish the base location of the support 20. The robot 46 is put into free-drive mode where the vertical orientation of the gripper 52 is aligned to the Z-direction of the robot 46, and the end of arm segment 50 can be hand-guided to clamp onto the three corner alignment members 42A-C. By using V-groove fingers 54, closing the gripper 52 onto the alignment members 42A-C while in free-drive mode would self-center the gripper 52 onto the alignment members 42A-C. The XYZ location of the alignment member 42A-C relative to the robot 46 can then be recorded for each alignment member 42 using this method. The Z-direction can be recorded by touching the robot fingers 54 to the top of an alignment member 42 or to the upper surface 30 of the support 20, or by ensuring that the fingers 54 seat in the Z-direction when clamping onto the alignment members 42. With the 3D location of the three alignment members 42A-C stored, a base coordinate system can be established for the automatic calibration system to start.

Using the coordinate system and mapping with the three alignment members 42A-C, the automatic cycle runs to position the robot 46 around the remaining alignment members 42, followed by commanding the robot into free-drive mode and clamping the gripper fingers 54 onto the alignment members 42. The robot will self-center on the alignment members 42 and the robot position is then stored. There is sufficient accuracy to find each of the alignment members 42 using the baseline coordinate system established first with the three alignment members 42A-C.

Following the base support calibration, a first tray 56 can be stacked on the alignment members 42 of the support 20 and the spacers 100' of the tray 56 can be similarly measured and stored. A next tray 56 can then be stacked and automatically measured. This process continues until the full stack of trays 56 have been measured. The trays 56 should ideally be of the same spacing to map the full 3D array of trays 56. If the stack spacing between trays is changed for shorter or taller parts, the system will simply interpolate the tray location accordingly. Thus, the system can compute the locations for any tray 56 within the mapped 3D volume. Note that both the infeed support 20 and the outfeed support 20 would need to be calibrated using this method to map their respective 3D volumes accordingly.

As discussed above, each tray 56 can have different size pockets 92 defined in the job manager software. With the mapping of the six spacers 100' of the tray 56 and their fixed relationship geometrically with the tray 56, the robot 46 can be commanded to accurately pick and place workpieces 109 in the infeed trays 56 and outfeed trays 56 provided the mounted location and pocket dimensions of the grid tray 56 are specified in the job manager software. Each workpiece 109 location in the tray 56 can be geometrically computed and then the actual required robot position is interpolated to move the robot 46 to the correct position using the calibrated spacer 100' locations. Hence, the calibration of the grid tray 56 using three alignment members 42A-C as discussed above would not be needed as the job manager software would now compute the grid and workpiece 109 locations and then interpolate to the mapped robot space.

As should be apparent from the foregoing, the calibration process only needs to be performed once. If the support 20 docking is not accurate or its docking location changes, the only thing that needs to be measured again will be the first three alignment members 42A-C on the support 20 to establish its new location. All other calibrated locations can be transformed to the new support 20 location, provided the new location of the support 20 is not materially different from the original calibration location. However, it is of course expected that the docking locations of the supports 20 and the robot 46 will be accurate and repeatable sufficiently so that calibration of the entire system is only needed once.

The above-described system and methods have several benefits. First, the trays 56 are only lifted by the robot 46 when they are empty. Thus, a robot 46 with lower payload capacity may be used, which reduces the cost of the overall system. Second, the supports 20, whether functioning as infeed supports or outfeed supports, are identical, which reduces the complexity of the system and lowers the cost. Third, the trays 56 are substantially identical, but can be configured using the spacers 100, 100', 100" to accommodate workpieces of different height. The uniformity of the trays 56 provides benefits for programming the controller 14 and the configurability provides flexibility for handling a variety of different workpieces in high-mix manufacturing.

While this invention has been described as having exemplary designs, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A tray system for robotic part processing, comprising:
a plurality of substantially identical trays, each tray including a base having an upper surface and a lower surface, a frame connected to the upper surface of the base and defining a plurality of pockets for receiving workpieces, and a plurality of spacers, each spacer including an alignment feature on one of the upper surface or the lower surface of the base, and at least one stacking post on another of the upper surface or the lower surface of the base of each of the plurality of trays, each stacking post including one end having a centering tip and another end configured to mate with another stacking post;
wherein the trays are configured to be stacked in alignment with one another by placing the plurality of alignment features of one tray into engagement with the plurality of spacers of another tray.

2. The tray system of claim 1, wherein the other end of each stacking post is an alignment end having an interior surface shaped to receive a centering tip of another stacking post.

3. The tray system of claim 2, wherein each stacking post includes a threaded opening that extends between the one end and the alignment end.

4. The tray system of claim 3, wherein each of the plurality of spacers further includes a bolt including a head, the bolt being configured to extend through an alignment feature and the base of a tray, and to be threaded into the threaded opening of the at least one stacking post, thereby causing the head of the bolt to seat within a recess of the alignment feature and connecting the alignment feature and the at least one stacking post to the base.

5. The tray system of claim 4, further comprising a plurality of solid spacers positioned between the base and the frame, the bolt of each of the plurality of spacers extending though one of the plurality of solid spacers.

6. The tray system of claim 1, wherein each alignment feature includes a beveled surface and a central opening and each centering tip includes a tapered end and a tip, the tapered end being configured to cooperate with the beveled surface to position the tip within the central opening of the alignment feature.

7. The tray system of claim 1, wherein:
each alignment feature is connected to the lower surface of the base and each of the at least one stacking posts is connected to the upper surface of the base of each of the plurality of trays; and
wherein the trays are configured to be stacked in alignment with one another by placing the alignment features of an upper tray onto the centering tips of the at least one stacking post connected to a lower tray.

8. The tray system of claim 1, further comprising:
a plurality of substantially identical supports for carrying any one or more of the plurality of trays, each support including a base having an upper surface and a plurality of alignment members on the upper surface, the plurality of alignment members of each support being configured to mate with a corresponding plurality of alignment features connected to the lower surface of the base of any one of the plurality of trays to position the tray in a predetermined location and orientation on the support.

9. The tray system of claim 8, wherein each support is a cart including a plurality of wheels connected to a lower surface of the base of the support.

10. The tray system of claim 8, further comprising a docking station including at least one dock, each of the at least one dock being configured to position any support of the plurality of supports in a predetermined location and orientation.

11. The tray system of claim 10, wherein the docking station is mounted on a processing machine.

12. The tray system of claim 10, wherein each of the supports includes a docking member and each of the at least one dock includes a mating component configured to mate with the docking member of any support of the plurality of supports to position the support.

13. The tray system of claim 10, wherein a first dock of the at least one dock of the docking station is configured to position a first support functioning as an infeed support, a second dock is configured to position a second support functioning as an outfeed support, and a third dock is configured to position a third support functioning as a robot support.

14. The tray system of claim 13, wherein the robot support includes a robot for moving workpieces from at least one tray on the infeed support to a workspace of a processing machine and from the workspace to at least one tray on the outfeed support, and for removing empty trays from the infeed support and stacking the empty trays on the outfeed support.

15. The tray system of claim 8, further comprising a first dock configured to mate with a mating component on a first support functioning as a robot support, and a second dock mounted on the robot support and configured to mate with a mating component on a second support functioning as an infeed support.

16. The tray system of claim 15, further comprising a third dock mounted on the robot support and configured to mate with a mating component on a third support functioning as an outfeed support.

17. The tray system of claim 15, wherein the first dock is mounted on a processing machine.

18. The tray system of claim 8, wherein each of the supports includes a height adjustor operably coupled to the base and configured to position the upper surface of the base at any of a plurality of vertical positions.

19. The tray system of claim 1, wherein the other end of each stacking post is a threaded end configured to thread into a threaded opening formed in the upper surface of the base of each of the plurality of trays and the one end of each stacking post is a threaded opening configured to receive a threaded end of another stacking post.

20. The tray system of claim 19, wherein the threaded opening of each stacking post is also configured to receive a threaded end of a centering tip of the spacer.

21. The tray system of claim 1, wherein each tray of the plurality of trays includes a first mating structure configured to mate with a second mating structure of an arm of a robot to facilitate lifting the tray and moving the tray from one location to another location.

22. The tray system of claim 21, wherein the first mating structure is on the frame of the tray.

23. The tray system of claim 21, wherein the first mating structure is one of attached to or integral with at least one of the plurality of spacers of the tray.

24. The tray system of claim 21, wherein the first mating structure is an engagement block mounted to the tray and the second mating structure is a mating block mounted to an arm of the robot, the engagement block including a plurality of non-parallel bores and the mating block including a fixed pin configured to be received by a first bore of the plurality of non-parallel bores and a movable pin configured to be received by a second bore of the plurality of non-parallel bores.

25. The tray system of claim 24, wherein the movable pin is biased by a biasing member toward an extended position and is retracted by an actuator toward a retracted position.

26. The tray system of claim 1, wherein each tray of the plurality of trays includes a hook attached to the tray at a position offset from a center line of the tray, the hook being configured to mate with an interlock hook coupled to an arm of a robot to facilitate lifting the tray and moving it from one location to another location.

27. The tray system of claim 26, wherein each hook is attached to the frame of the tray.

28. A tray for use in robotic part processing, comprising:
a base including an upper surface and a lower surface;
a frame connected to the upper surface and including a plurality of segments defining a plurality of pockets;
a plurality of alignment features on one of the upper surface or the lower surface of the base; and
a plurality of spacers integrally formed on another of the upper surface or the lower surface of the base, each spacer being configured to engage with an alignment feature on one of an upper surface or a lower surface of a base of a different tray.

29. A tray for use in robotic part processing, comprising:
a base including an upper surface and a lower surface;
a frame connected to the upper surface and including a plurality of segments defining a plurality of pockets; and
a plurality of spacers coupled to the base, the plurality of spacers including a plurality of alignment features positioned adjacent one of the upper surface or the lower surface of the base, a plurality of stackable posts positioned adjacent another of the upper surface or the lower surface of the base, each stackable post having a centering end and an alignment end, and a plurality of bolts configured to couple the plurality of alignment features and the plurality of stackable posts to the base;
wherein the centering end of each of the stackable posts is configured to mate with any of the plurality of alignment features and any of the alignments ends of other stackable posts to increase the length of the spacer.

30. The tray of claim 29, further comprising a pad attached to the upper surface of the base.

31. The tray of claim 29, wherein each of the alignment ends of the stackable posts includes an interior surface shaped to receive a centering end of another stackable post.

32. The tray of claim 29, wherein each of the plurality of bolts includes a head, the bolt being configured to extend through an alignment feature and the base of a tray, and to be threaded into a central threaded opening of a stackable post, thereby causing the head of the bolt to seat within a recess of the alignment feature and connecting the alignment feature and the stackable post to the base.

33. The tray of claim 32, wherein the central threaded opening extends from the centering end of the stackable post to the alignment end of the stackable post.

34. A method of robotic workpiece transfer, comprising:
positioning a robot relative to a workspace of a processing machine;
positioning an infeed support relative to the robot;
determining a coordinate system of the infeed support relative to a base of the robot from fixed features on the infeed support;
positioning an outfeed support relative to the robot;
determining a coordinate system of the outfeed support relative to the base of the robot from fixed features on the outfeed support;
calibrating a 3D space to establish a location and orientation, relative to the base of the robot, of a plurality trays positioned on the infeed support;
performing a workpiece transfer sequence to transfer workpieces from a tray of the plurality of trays positioned on the infeed support, to the workspace, and to a tray on the outfeed support;
repeating the workpiece transfer sequence until an uppermost tray of the plurality of trays on the infeed support is empty;
determining, in response to the uppermost tray being empty, whether the empty uppermost tray is a bottom tray of the plurality of trays; and
responding to the empty uppermost tray not being the bottom tray by controlling the robot to move the empty uppermost tray onto an uppermost tray on the outfeed support and repeating the workpiece transfer sequence, the repeating step and the determining step.

35. The method of claim 34, wherein performing a workpiece transfer sequence includes
controlling the robot to remove a workpiece from an uppermost tray of a stack of trays on the infeed support;
controlling the robot to place the removed workpiece in the workspace to be processed into a processed workpiece;
controlling the robot to remove the processed workpiece from the workspace; and controlling the robot to place the processed workpiece into an uppermost tray on the outfeed support.

36. The method of claim 34, wherein calibrating the 3D space includes teaching the robot positions of three points on each tray.

37. The method of claim 34, wherein calibrating the 3D space includes receiving a stacking height between adjacent trays.

38. The method of claim 37, wherein the stacking height between all adjacent trays of the plurality of trays is the same.

39. The method of claim 34, further comprising receiving a definition of spacing of pockets of the plurality of trays.

40. The method of claim 34, wherein determining a coordinate system of the infeed support includes the robot gripping at least three alignment members on the infeed support and contacting an upper surface of the infeed support.

41. The method of claim 34, wherein calibrating a 3D space further includes the robot gripping at least three spacers attached to a tray of the plurality of trays and determining a stacking height between the tray and another tray of the plurality of trays stacked on the tray.

42. The method of claim 34, further comprising receiving definitions of trays positioned on the infeed support and holding workpieces, the definitions including a stacking height between trays and the location and orientation of pockets for workpieces on the trays.

43. The method of claim 42, wherein receiving definitions of trays includes reading one of an RFID or a QR code associated with each tray.

44. The method of claim 39, further comprising:
responding to the empty uppermost tray of the plurality of trays on the infeed support being the bottom tray of the plurality of trays by determining whether an additional infeed support with a plurality of trays is available; and
responding to an additional infeed support being available by using the infeed support as an outfeed support and using the additional infeed support as the infeed support, and repeating the workpiece transfer sequence, the repeating step, the determining step, and the step of responding to the empty uppermost tray of the plurality of trays on the infeed support not being the bottom tray.
